# EUROPÄISCHE PATENTSCHRIFT

(11) **EP 4 553 363 B1**
(45) Veröffentlichungstag und Bekanntmachung des Hinweises auf die Patenterteilung: **09.09.2026**
(21) Anmeldenummer: 24208743.5
(22) Anmeldetag: 24.10.2024
(51) Int. Cl.: F16L 55/32, F16L 55/38, F16L 55/40

(54) **INSPEKTIONSVORRICHTUNG UND VERFAHREN ZUM BETRIEB EINER INSPEKTIONSVORRICHTUNG**
INSPECTION DEVICE AND METHOD FOR OPERATING AN INSPECTION DEVICE
DISPOSITIF D'INSPECTION ET PROCÉDÉ DE FONCTIONNEMENT D'UN DISPOSITIF D'INSPECTION

(30) Priorität: 13.11.2023 DE 102023131536
(43) Veröffentlichungstag der Anmeldung: 14.05.2025
(73) Patentinhaber: Westnetz GmbH, 44139 Dortmund (DE)
(72) Erfinder: Penczek, Torben, 45772 Marl (DE); Kreutz, Stefan, 57482 Wenden (DE)
(74) Vertreter: Bals & Vogel Patentanwälte PartGmbB

(56) Entgegenhaltungen:
- WO-A1-2020/142034
- WO-A1-2022/005866
- DE-A1- 102019 113 385
- US-A1- 2007 022 935
- US-A1- 2016 082 589

## Beschreibung

Die Erfindung betrifft eine Inspektionsvorrichtung mit den Merkmalen des unabhängigen Patentanspruchs 1, ein Inspektionssystem mit den Merkmalen des unabhängigen Patentanspruchs 7, ein Verfahren mit den Merkmalen des unabhängigen Patentanspruchs 9, ein Verfahren mit den Merkmalen des unabhängigen Patentanspruchs 12, ein Computerprogrammprodukt mit den Merkmalen des unabhängigen Patentanspruchs 13, ein computerlesbares Speichermedium mit den Merkmalen des unabhängigen Patentanspruchs 14 sowie ein Datenträgersignal mit den Merkmalen des unabhängigen Patentanspruchs 15.

Rohrleitungen, insbesondere Gasleitungen, sind in ihrem Betrieb hohen Belastungen ausgesetzt und weisen daher einen betriebsbedingten Verschleiß auf. Im Inneren der Rohrleitungen können hohe Drücke anliegen. Ferner sind die Rohrleitungen oft äußeren Einflüssen ausgesetzt, welche einen alterungsbedingten Verschleiß begünstigen können. Insbesondere können Leckagen entstehen, wobei ein im Inneren der Rohrleitung geführter Fluidstrom zumindest teilweise aus der Rohrleitung in die Umgebung entweichen kann. Solche Leckagen gilt es aufgrund der dadurch verbundenen Umweltbelastung sowie des störenden Einflusses auf den Betrieb der Rohrleitung bzw. des Rohrleitungsnetzes zu vermeiden. Um eine fehlerfreie Funktion von Rohrleitungen, insbesondere Gasleitungen sicherzustellen, bedürfen diese einer regelmäßigen Inspektion. Auf Grundlage der Inspektion kann festgestellt werden, ob Reparaturmaßnahmen und/oder Erneuerungsmaßnahmen an der Rohrleitung bzw. dem betreffenden Rohrleitungsabschnitt erforderlich sind oder ob ein fehlerfreier Betrieb der Rohrleitung nach wie vor gewährleistet werden kann.

Da viele Rohrleitungen unterirdisch verlegt sind, ist eine Inspektion der betreffenden Rohrleitungsabschnitte quasi ausschließlich aus dem Inneren der Rohrleitungen möglich. Es ergibt sich zusätzlich die Problematik, dass zu inspizierende Rohrleitungen bzw. Rohrleitungsabschnitte oft Bestandteil weit verzweigter Netze sind. Zu inspizierende Rohrleitungsabschnitte könnten entsprechend lang und gleichzeitig nur an wenigen, ggf. weit voneinander entfernten, Positionen zugänglich sein, um eine Inspektionsvorrichtung in das Innere der Rohrleitung einzubringen oder daraus zu entnehmen. Gleichzeitig kann eine in der Rohrleitung befindliche Inspektionsvorrichtung aufgrund damit verbundener Betriebseinschränkungen nicht ohne Weiteres kabelgebunden mit Energie versorgt werden. Bei der kabellosen Energieversorgung einer Inspektionsvorrichtung (bspw. mit einem Akkumulator) ergibt sich, insbesondere bei einer Bewegung der Inspektionsvorrichtung entgegen der Strömungsrichtung eines in der Rohrleitung geführten Fluidstroms, eine stark begrenzte Reichweite der Inspektionsvorrichtung. Weitere Herausforderungen stellen Knicke, Steigungen und Windungen in den jeweiligen Rohrleitungen dar, welche durch Inspektionsvorrichtungen zuverlässig überwunden werden müssen, damit die Inspektion eines Rohrleitungsabschnitts zuverlässig durchführbar ist.

Es ist daher eine Aufgabe der vorliegenden Erfindung, wenigstens einen der voranstehend beschriebenen Nachteile zumindest teilweise zu überwinden. Insbesondere ist es Aufgabe der Erfindung eine Inspektionsvorrichtung zur, zumindest abschnittsweise, Inspektion einer fluidführenden Rohrleitung, ein Inspektionssystem zur, zumindest abschnittsweisen, Inspektion einer fluidführenden Rohrleitung sowie ein Verfahren zum Betrieb einer Inspektionsvorrichtung und/oder eines Inspektionssystems bereitzustellen, wodurch eine möglichst einfache und/oder zuverlässige Inspektion wenigstens einer Rohrleitung durchführbar ist. Insbesondere ist es eine Aufgabe der Erfindung, eine zuverlässige Bewegbarkeit der Inspektionsvorrichtung innerhalb der Rohrleitung sowie gleichzeitig eine möglichst hohe Reichweite der Inspektionsvorrichtung zu ermöglichen.

Die voranstehende Aufgabe wird gelöst durch eine Inspektionsvorrichtung mit den Merkmalen des unabhängigen Patentanspruchs 1, durch ein Inspektionssystem mit den Merkmalen des unabhängigen Patentanspruchs 7, durch ein Verfahren mit den Merkmalen des unabhängigen Patentanspruchs 9, durch ein Verfahren mit den Merkmalen des unabhängigen Patentanspruchs 12, durch ein Computerprogrammprodukt mit den Merkmalen des unabhängigen Patentanspruchs 13, durch ein computerlesbares Speichermedium mit den Merkmalen des unabhängigen Patentanspruchs 14 sowie durch ein Datenträgersignal mit den Merkmalen des unabhängigen Patentanspruchs 15. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Inspektionsvorrichtung beschrieben sind, selbstverständlich auch im Zusammenhang mit dem erfindungsgemäßen Inspektionssystem und/oder im Zusammenhang mit den erfindungsgemäßen Verfahren und/oder im Zusammenhang mit dem erfindungsgemäßen Computerprogrammprodukt und/oder im Zusammenhang mit dem erfindungsgemäßen computerlesbaren Speichermedium und/oder im Zusammenhang mit dem erfindungsgemäßen Datenträgersignal und jeweils umgekehrt, so dass bezüglich der Offenbarung zu den einzelnen Erfindungsaspekten stets wechselseitig Bezug genommen wird bzw. werden kann.

Die Dokumente US 2007/022935 A1, DE 10 2019 113385 A1 und WO 2020/142034 A1 offenbaren bekannte Inspektionsvorrichtungen nach der Präamble der beanspruchten Erfindung.

Erfindungsgemäß vorgesehen ist eine Inspektionsvorrichtung zur, zumindest abschnittsweisen, Inspektion einer fluidführenden Rohrleitung, die Inspektionsvorrichtung umfassend wenigstens einen elektrischen Energiespeicher sowie wenigstens eine Rotoreinheit, wobei die Rotoreinheit wenigstens einen Rotor und wenigstens einen Generator umfasst und wobei der Rotor mit einer Welle des Generators derart in Wirkverbindung steht, dass eine Rotation des Rotors auf die Welle übertragbar ist und wobei der Generator mit dem Energiespeicher derart in Wirkverbindung steht, dass eine durch den Generator erzeugte elektrische Energie zumindest teilweise in dem Energiespeicher speicherbar ist.

In anderen wird erfindungsgemäß eine Inspektionsvorrichtung zur, zumindest abschnittsweisen, Inspektion einer fluidführenden Rohrleitung vorgeschlagen. Die Inspektionsvorrichtung umfasst wenigstens einen elektrischen Energiespeicher, vorzugsweise einen Akkumulator und/oder eine Batterie, sowie wenigstens eine Rotoreinheit. Die Rotoreinheit umfasst wiederum wenigstens einen Rotor sowie ferner wenigstens einen Generator. Der Rotor ist mit einer Welle des Generators verbunden bzw. steht mit dieser derart in Wirkverbindung, dass eine Rotation des Rotors auf die Welle (oder umgekehrt eine Rotation der Welle auf den Rotor) übertragbar ist. Ferner steht der Generator mit dem Energiespeicher derart in Wirkverbindung, dass eine durch den Generator erzeugte elektrische Energie zumindest teilweise in den Energiespeicher einbringbar ist, sodass die elektrische Energie zumindest teilweise in dem Energiespeicher speicherbar ist.

Eine erfindungsgemäße Inspektionsvorrichtung bietet den Vorteil, dass durch wenigstens eine Rotoreinheit die kinetische Energie eines in Rohrleitung geführten Fluidstroms zumindest teilweise in elektrische Energie umgewandelt und in dem Energiespeicher der Inspektionsvorrichtung gespeichert werden kann. Anschließend steht diese elektrische Energie für den Betrieb der Inspektionsvorrichtung zur Verfügung. Insbesondere kann die in dem Energiespeicher verfügbare elektrische Energie zum Vortrieb der Inspektionsvorrichtung innerhalb der Rohrleitung, aber auch für den Betrieb weiterer Systeme der Inspektionsvorrichtung, genutzt werden. Die weiteren Systeme können bspw. Sensorelemente, Aktuatoren, Steuereinheiten und/oder Kommunikationsschnittstellen sein.

Durch die Gewinnung elektrischer Energie aus der kinetischen Energie des in der Rohrleitung geführten Fluidstroms kann die Reichweite der Inspektionsvorrichtung deutlich erhöht werden, da der Energiespeicher der Inspektionsvorrichtung wiederkehrend oder kontinuierlich mit elektrischer Energie beladen werden kann, während sich die Inspektionsvorrichtung in der Rohrleitung befindet. Im Falle eines abnehmenden Ladezustands des Energiespeichers ist es somit nicht erforderlich die Inspektionsvorrichtung an eine vorgegebene Entnahmestelle zu bewegen, aus der Rohrleitung zu entnehmen, aufzuladen und sodann wieder (ggf. an anderer Stelle) in die Rohrleitung einzubringen. Insofern wird nicht nur die Reichweite der Inspektionsvorrichtung erhöht, sondern der Vorgang einer Inspektion der Rohrleitung insgesamt vereinfacht, wodurch letztlich Zeit und Kosten gespart werden können.

Im Rahmen der vorliegenden Erfindung kann ein in der Rohrleitung geführtes Fluid vorzugsweise ein gasförmiges Fluid bzw. ein Gas sein. Insbesondere kann das Fluid ein Erdgas oder Wasserstoff sein. Auch eine Mischung aus Erdgas und Wasserstoff ist vorliegend denkbar. Vorzugsweise kann vorgesehen sein, dass die Rohrleitung Bestandteil eines Gasnetzes, insbesondere eines Erdgasnetzes und/oder Wasserstoffnetzes ist.

Es ist im Rahmen der vorliegenden Erfindung denkbar, dass wenigstens ein Generator als ein Elektromotor ausgebildet ist, wobei insbesondere der Elektromotor in einem Motorbetrieb und einem Generatorbetrieb betreibbar ist. Der Motorbetrieb zeichnet sich dadurch aus, dass durch den Elektromotor elektrische Energie in mechanische Energie gewandelt wird. Insbesondere nutzt der Elektromotor im Motorbetrieb elektrische Energie zum Antrieb einer Welle des Elektromotors. Die elektrische Energie kann dem Elektromotor bspw. aus einem elektrischen Energiespeicher der Inspektionsvorrichtung zugeführt werden. Der Generatorbetrieb zeichnet sich hingegen dadurch aus, dass durch den Elektromotor mechanische Energie, insbesondere Rotationsenergie, einer Welle des Elektromotors, in elektrische Energie umgewandelt wird. Die elektrische Energie kann einem elektrischen Energiespeicher der Inspektionsvorrichtung zugeführt und dort zumindest teilweise gespeichert werden. Somit ist vorzugsweise der Elektromotor gleichzeitig als Motor und Generator betreibbar und die Rotoreinheit kann genutzt werden, um einerseits, insbesondere mit dem Elektromotor im Generatorbetrieb, elektrische Energie aus dem in der Rohrleitung geführten Fluidstrom zu gewinnen und andererseits, insbesondere mit dem Elektromotor im Motorbetrieb, eine Vortriebskraft für den Vortrieb der Inspektionsvorrichtung zu erzeugen.

Wenigstens ein Rotor kann im Rahmen der vorliegenden Erfindung als ein Propeller, insbesondere als ein freifahrender Propeller oder Mantelpropeller, ausgebildet sein. Es kann vorgesehen sein, dass wenigstens ein Rotor wenigstens ein Rotorblatt, insbesondere eine Mehrzahl von Rotorblättern, vorzugsweise wenigstens zwei oder wenigstens drei Rotorblätter, umfasst. Wenigstens ein Rotorblatt kann zumindest abschnittsweise ein aerodynamisches Profil, insbesondere mit einer Saugseite und einer Druckseite, aufweisen, sodass durch eine Umströmung des Rotorblatts mit einem Fluid eine Auftriebskraft an dem Rotorblatt erzeugbar ist, wobei insbesondere die Auftriebskraft zumindest teilweise orthogonal zu einer Rotationsachse des Rotors wirkt. In anderen Worten kann durch eine Umströmung der Rotorblätter des Rotors mit dem in der Rohrleitung geführten Fluid an den Rotorblättern eine Auftriebskraft erzeugt werden, wobei aus dieser Auftriebskraft ein Drehmoment resultiert und der Rotor entsprechend in Rotation versetzt wird. Durch eine Rotation des Rotors wird auch die Welle des Generators der Rotoreinheit in Rotation versetzt, sodass die Rotationsenergie der Welle durch den Generator zumindest teilweise in elektrische Energie wandelbar ist. So ist die kinetische Energie des in der Rohrleitung geführten Fluids durch die Rotoreinheit zumindest teilweise in elektrische Energie wandelbar.

Unter einer Hauptströmungsrichtung soll vorliegend eine entlang der Mittelachse der Rohrleitung gerichtete Strömungsrichtung verstanden werden, welche den Hauptströmungscharakter des in der Rohrleitung geführten Fluidstroms beschreibt. Unabhängig davon können lokal variierend auch weitere, bspw. entlang des Umfangs der Rohrleitung gerichtete, Geschwindigkeitskomponenten in dem in der Rohrleitung geführten Fluidstrom vorliegen.

Im Rahmen der Erfindung kann es von Vorteil sein, dass wenigstens ein Flügelelement umfasst ist, wobei durch eine Anströmung des Flügelelements durch das in der Rohrleitung geführte Fluid eine Anpresskraft zwischen der Inspektionsvorrichtung und einer Innenwand der Rohrleitung erzeugbar ist. In anderen Worten kann vorgesehen sein, dass die Inspektionsvorrichtung wenigstens ein Flügelelement umfasst, wobei das Flügelelement dazu ausgebildet ist in Wechselwirkung mit dem in der Rohrleitung geführten Fluidstrom eine Anpresskraft zwischen der Inspektionsvorrichtung und einer Innenwand der Rohrleitung zu erzeugen. Mit einer Anpresskraft ist gemeint, dass die Inspektionsvorrichtung durch die betreffende Kraft an die Innenwand der Rohrleitung angepresst bzw. angedrückt wird. Hierdurch ergibt sich der Vorteil, dass eine sichere Positionierung und/oder Fortbewegung der Inspektionsvorrichtung innerhalb der Rohrleitung unterstützt werden kann. So können insbesondere hohe Strömungsgeschwindigkeiten in der Rohrleitung einen Auftrieb an der Inspektionsvorrichtung erzeugen bzw. dazu führen, dass diese zumindest temporär ungewollt zumindest teilweise den Bodenkontakt verliert bzw. eine Fehlpositionierung der Inspektionsvorrichtung innerhalb der Rohrleitung auftritt. Aufgrund des fortwährenden Fluidstroms innerhalb der Rohrleitung kann es vorkommen, dass eine solche Fehlpositionierung nicht korrigierbar ist und die Inspektionsvorrichtung dauerhaft in ihrem Betrieb beeinträchtigt ist bzw. keine gezielte Steuerung und/oder Fortbewegung der Inspektionsvorrichtung in der Rohrleitung mehr möglich ist. Durch die Erzeugung einer Anpresskraft kann die Inspektionsvorrichtung in Bezug auf ihre Positionierung in der Rohrleitung gesichert werden. Auch eine Traktion zwischen einem oder mehreren Führungsrädern bzw. Antriebsrädern der Inspektionsvorrichtung kann gesteigert werden, wodurch ein zuverlässiger Vortrieb der Inspektionsvorrichtung unterstützt werden kann.

Es ist im Rahmen der vorliegenden Erfindung ferner denkbar, dass wenigstens ein Flügelelement zumindest abschnittsweise bewegbar ist, insbesondere sodass ein Anstellwinkel des Flügelelements veränderbar ist. In anderen Worten kann vorgesehen sein, dass wenigstens ein Flügelelement relativ zu der Inspektionsvorrichtung, insbesondere relativ zu einem Trägerelement der Inspektionsvorrichtung, bewegbar ist, sodass der Anstellwinkel zwischen dem Flügelelement und der Hauptströmungsrichtung eines in der Rohrleitung geführten Fluids veränderbar ist. Hierdurch ergibt sich der Vorteil, dass die durch das Flügelelement in Wechselwirkung mit dem in der Rohrleitung geführten Fluidstrom erzeugte Anpresskraft in Abhängigkeit des Anstellwinkels des Flügelelements zumindest teilweise variiert werden kann. Gleichzeitig ergibt sich der Vorteil, dass auch der durch das Flügelelement erzeugte Widerstand in der Fluidströmung variierbar ist. Bei vergleichsweise geringen Strömungsgeschwindigkeiten in der Rohrleitung kann das Eigengewicht der Inspektionsvorrichtung ausreichend sein, um eine sichere Positionierung und/oder Fortbewegung der Inspektionsvorrichtung in der Rohrleitung zu gewährleisten. Eine zusätzliche Anpresskraft wäre in diesem Fall somit nicht erforderlich. Ein aufgerichtetes Flügelelement würde, insbesondere bei einer Bewegung der Inspektionsvorrichtung gegen den Fluidstrom, jedoch den Widerstand der Inspektionsvorrichtung erhöhen und einen Vortrieb erschweren. Insofern ist es in diesem Fall vorteilhaft den Anstellwinkel des Flügelelements relativ zu der Hauptströmungsrichtung derart einzustellen, dass ein durch das Flügelelement erzeugter Widerstand minimiert wird. Bei höheren Strömungsgeschwindigkeiten kann das Flügelelement hingegen zumindest teilweise aufgestellt und ein höherer Widerstand zugunsten einer höheren Anpresskraft in Kauf genommen werden. Bei einer Fortbewegung der Inspektionsvorrichtung in der Rohrleitung mit dem Fluidstrom bzw. entlang der Hauptströmungsrichtung, kann das Flügelelement als eine Art Segel genutzt werden um die zum Vortrieb benötigte Energie zu reduzieren. Entsprechend kann es in diesem Fall vorteilhaft sein, das Flügelelement bei einer gewünschten Fortbewegung der Inspektionsvorrichtung zumindest teilweise aufzustellen. Soll die Inspektionsvorrichtung hingegen an einer spezifischen Position innerhalb der Rohrleitung verbleiben, bspw. um einen Ladevorgang durchzuführen, kann es in diesem Fall vorteilhaft sein den Anstellwinkel derart einzustellen, dass ein Widerstand der Inspektionsvorrichtung minimiert wird, um die durch eine Wechselwirkung zwischen dem Flügelelement und Fluidstrom erzeugte Vortriebskraft zu minimieren. Wenigstens ein Flügelelement kann vorzugsweise an einem Trägerelement der Inspektionsvorrichtung angeordnet, insbesondere beweglich und/oder schwenkbar gelagert, sein. Zusätzlich oder alternativ kann wenigstens ein Flügelelement als eine ebene Platte ausgebildet sein.

Es kann vorgesehen sein, dass wenigstens ein Flügelelement mit wenigstens einem Aktuator in Wirkverbindung steht, sodass das Flügelelement zumindest abschnittsweise durch den Aktuator, insbesondere stufenlos, bewegbar ist bzw. der Anstellwinkel des Flügelelements, insbesondere relativ zur Hauptströmungsrichtung eines in der Rohrleitung geführten Fluidstroms, durch den Aktuator zumindest teilweise veränderbar ist. Hierdurch ergibt sich der Vorteil einer automatisierbaren Bewegbarkeit des Flügelelements bzw. einer fernsteuerbaren Bewegbarkeit des Flügelelements.

Im Rahmen der Erfindung ist es denkbar, dass wenigstens ein Kontaktierungselement umfasst ist, wobei durch eine Kontaktierung einer Innenwand der Rohrleitung durch das Kontaktierungselement eine Anpresskraft zwischen der Inspektionsvorrichtung und der Innenwand der Rohrleitung erzeugbar ist. In anderen Worten kann vorgesehen sein, dass die Inspektionsvorrichtung wenigstens ein Kontaktierungselement umfasst. Ein Kontaktierungselement kann vorzugsweise dazu ausgebildet sein eine Innenwand der Rohrleitung zumindest temporär zu kontaktieren und hierdurch eine Anpresskraft zwischen der Inspektionsvorrichtung und der Innenwand der Rohrleitung zu erzeugen. Durch die Verwendung eines Kontaktierungselements ergibt sich der Vorteil, dass eine sichere Positionierung der Inspektionsvorrichtung innerhalb der Rohrleitung unterstützt werden kann. So können insbesondere hohe Strömungsgeschwindigkeiten in der Rohrleitung einen Auftrieb an der Inspektionsvorrichtung erzeugen bzw. dazu führen, dass diese zumindest temporär ungewollt zumindest teilweise den Bodenkontakt verliert bzw. eine Fehlpositionierung der Inspektionsvorrichtung innerhalb der Rohrleitung auftritt. Aufgrund des fortwährenden Fluidstroms innerhalb der Rohrleitung kann es vorkommen, dass eine solche Fehlpositionierung nicht korrigierbar ist und die Inspektionsvorrichtung dauerhaft in ihrem Betrieb beeinträchtigt ist bzw. keine gezielte Steuerung und/oder Fortbewegung der Inspektionsvorrichtung in der Rohrleitung mehr möglich ist. Durch die Erzeugung einer Anpresskraft kann die Inspektionsvorrichtung in Bezug auf ihre Positionierung in der Rohrleitung gesichert werden. Durch die Verwendung eines Kontaktierungselements können insbesondere auch Kippbewegungen der Inspektionsvorrichtung zuverlässig vermieden werden.

Es ist im Rahmen der Erfindung vorstellbar, dass wenigstens ein Kontaktierungselement von einem Aktivzustand in einen Passivzustand und umgekehrt überführbar ist. Unter einem Aktivzustand soll vorliegend ein Zustand verstanden werden, in welchem das Kontaktierungselement eine Innenwand der Rohrleitung kontaktiert und eine Anpresskraft zwischen der Inspektionsvorrichtung und der Innenwand der Rohrleitung erzeugt. Ein Passivzustand soll hingegen als ein Zustand verstanden werden, in welchem das Kontaktierungselement eine Innenwand der Rohrleitung nicht kontaktiert und somit auch keine Anpresskraft zwischen der Inspektionsvorrichtung und der Innenwand der Rohrleitung erzeugt wird.

Wenigstens ein Kontaktierungselement kann vorzugsweise als Teleskopmechanismus, insbesondere Teleskopspindel, ausgebildet sein, wobei insbesondere der Teleskopmechanismus wenigstens ein Schubgelenk oder mehr als ein Schubgelenk, insbesondere wenigstens zwei Schubgelenke, umfassen kann. Handelt es sich bspw. um eine Teleskopspindel, können die Schubgelenke auch als Drehschubgelenke ausgebildet sein. Ein Teleskopmechanismus bietet den Vorteil einer flexiblen Einstellbarkeit bei gleichzeitig kompaktem Bauraum.

Es kann vorgesehen sein, dass wenigstens ein Kontaktierungselement mit wenigstens einem Aktuator in Wirkverbindung steht, wobei insbesondere das Kontaktierungselement durch den Aktuator von einem Aktivzustand in einen Passivzustand und umgekehrt überführbar ist. Hierdurch ergibt sich der Vorteil einer automatisierbaren Bewegbarkeit des Kontaktierungselements bzw. einer fernsteuerbaren Bewegbarkeit.

Es kann im Rahmen der Erfindung vorgesehen sein, dass wenigstens ein Rotor, insbesondere wenigstens eine Rotoreinheit zumindest abschnittsweise bewegbar ist, sodass vorzugsweise ein Anstellwinkel des Rotors, insbesondere der Rotoreinheit, veränderbar ist. In anderen Worten kann vorgesehen sein, dass wenigstens ein Rotor, insbesondere eine Rotoreinheit, relativ zu der Inspektionsvorrichtung, insbesondere relativ zu einem Trägerelement der Inspektionsvorrichtung, bewegbar ist, sodass der Anstellwinkel zwischen dem Rotor, insbesondere der Rotoreinheit, und der Hauptströmungsrichtung eines in der Rohrleitung geführten Fluids veränderbar ist. Hierdurch ergibt sich der Vorteil, dass der Rotor, insbesondere die Rotoreinheit, in eine in Bezug auf die Erzeugung einer Vortriebskraft optimierte Position gebracht werden. So kann die Veränderung eines Anstellwinkels wenigstens eines Rotors, insbesondere wenigstens einer Rotoreinheit, vorteilhaft sein, um die Richtung einer durch den Rotor, insbesondere die Rotoreinheit, erzeugten Vortriebskraft zum Vortrieb der Inspektionsvorrichtung zu verändern. Bspw. kann die Inspektionsvorrichtung durch die Veränderung eines Anstellwinkels wenigstens eines Rotors, insbesondere wenigstens einer Rotoreinheit, zumindest temporär in einen Flugmodus überführt werden. Wenigstens ein Rotor, insbesondere wenigstens eine Rotoreinheit, kann vorzugsweise an einem Trägerelement der Inspektionsvorrichtung angeordnet, insbesondere beweglich und/oder schwenkbar gelagert, sein.

Es kann vorgesehen sein, dass wenigstens eine Rotoreinheit und/oder wenigstens ein Rotor mit wenigstens einem Aktuator in Wirkverbindung steht, wobei die Rotoreinheit und/oder der Rotor zumindest abschnittsweise, insbesondere stufenlos, durch den Aktuator bewegbar ist bzw. der Anstellwinkel des Rotors und/oder der Rotoreinheit, insbesondere relativ zur Hauptströmungsrichtung eines in der Rohrleitung geführten Fluidstroms, durch den Aktuator zumindest teilweise veränderbar ist. Hierdurch ergibt sich der Vorteil einer automatisierbaren Bewegbarkeit der Rotoreinheit bzw. einer fernsteuerbaren Bewegbarkeit der Rotoreinheit.

Erfindungsgemäß ist wenigstens ein Rotor, insbesondere wenigstens eine Rotoreinheit, zumindest zwischen einer ersten Position und einer zweiten Position, insbesondere stufenlos, bewegbar, wobei die Rotationsachse des Rotors, insbesondere des Rotors der Rotoreinheit, in der ersten Position orthogonal zu der Rotationsachse des Rotors, insbesondere des Rotors der Rotoreinheit, in der zweiten Position orientiert ist. Hierdurch ergibt sich der Vorteil, dass der Rotor bzw. die Rotoreinheit sowohl für einen Vortrieb für eine fahrende Fortbewegung der Inspektionsvorrichtung innerhalb der Rohrleitung also auch für einen Flugmodus der Inspektionsvorrichtung verwendbar ist. Es ist denkbar, dass die Rotationsachse in der ersten Position parallel oder im Wesentlichen parallel zu einer Längserstreckung der Inspektionsvorrichtung orientiert ist. Alternativ oder zusätzlich kann vorgesehen sein, dass die Rotationsachse in der zweiten Position parallel oder im Wesentlichen parallel zu einer Schwerkraftrichtung ausgerichtet ist.

Es kann vorgesehen sein, dass wenigstens eine Rotoreinheit wenigstens ein Käfigelement umfasst, wobei insbesondere das Käfigelement den Rotor zumindest abschnittsweise umschließt bzw. sich das Käfigelement zumindest abschnittsweise entlang des Umfangs des Rotors erstreckt. Der Umfang des Rotors soll dabei als derjenige Umfang verstanden werden, welcher durch die äußeren Spitzen des Rotors bei einer Rotation des Rotors beschrieben wird. Es kann vorgesehen sein, dass die Mittelachse, insbesondere Rotationsachse, wenigstens eines Käfigelements koaxial oder im Wesentlichen koaxial mit der Mittelachse, insbesondere Rotationsachse wenigstens eines Rotors angeordnet ist. Durch die Verwendung eines Käfigelements ergibt sich der Vorteil, dass ein Anstreifen des Rotors an der Innenwand der Rohrleitung effektiv verhindert werden kann. Schäden am Rotor, welche zu einer Fehlfunktion der Inspektionsvorrichtung führen können, können so verhindert und ein insgesamt zuverlässiger Betrieb der Inspektionsvorrichtung unterstützt werden.

Es ist ferner denkbar, dass die Inspektionsvorrichtung wenigstens ein Führungsgrad zur Führung der Inspektionsvorrichtung entlang der Rohrleitung umfasst, wobei insbesondere wenigstens ein Führungsrad, vorzugsweise durch eine Bremse, zumindest temporär blockierbar ist. In anderen Worten kann vorgesehen sein, dass die Inspektionsvorrichtung wenigstens ein Führungsrad umfasst, wobei durch das Führungsrad ein Kontakt zwischen der Inspektionsvorrichtung und der Innenwand der Rohrleitung herstellbar ist. So kann die Inspektionsvorrichtung mit einem oder mehreren Führungsrädern auf der Innenwand der Rohrleitung positioniert werden. Durch eine Vortriebskraft zum Vortrieb der Inspektionsvorrichtung kann die Inspektionsvorrichtung sodann relativ zu der Rohrleitung bzw. durch die Rohrleitung bewegt werden. Unter dem Blockieren eines Führungsrads soll vorliegend verstanden werden, dass eine Rotation des Rührungsrads relativ zu der Inspektionsvorrichtung verhindert wird. In anderen Worten wird ein Abrollen des Führungsrads auf der Innenwand der Rohrleitung verhindert. Hierdurch kann eine sichere und zuverlässige Positionierung der Inspektionsvorrichtung in der Rohrleitung unterstützt werden. Insbesondere kann eine Bewegung der Inspektionsvorrichtung relativ zu der Rohrleitung während eines Ladevorgangs, bei welchem der Energiespeicher durch die Rotoreinheit mit elektrischer Energie beladen wird, verhindert werden.

Wenigstens ein Führungsrad kann mit wenigstens einem Aktuator, insbesondere Bremsaktuator, in Wirkverbindung stehen, wobei insbesondere das Führungsrad durch den Aktuator, zumindest temporär, blockierbar ist. Hierdurch ergibt sich der Vorteil einer automatisierbaren bzw. fernsteuerbaren Blockierbarkeit bzw. Freigabe des Führungsrads.

Es kann vorgesehen sein, dass wenigstens ein Führungsrad als ein Vortriebsrad ausgebildet ist. In anderen Worten kann vorgesehen sei/n, dass wenigstens ein Führungsrad mit einem Antrieb der Inspektionsvorrichtung derart in Wirkverbindung steht, dass das Führungsrad durch den Antrieb antreibbar ist. Wenigstens ein Antrieb kann als ein Elektromotor ausgebildet sein. Insbesondere kann wenigstens ein Antrieb als ein Nabenmotor ausgebildet sein und vorzugsweise in das Vortriebsrad integriert sein. Hierdurch ergibt sich der Vorteil einer besonders kompakten Bauweise. Zusätzlich oder alternativ kann wenigstens ein Antrieb mit wenigstens einem elektrischen Energiespeicher der Inspektionsvorrichtung in Wirkverbindung stehen, sodass der Antrieb mit elektrischer Energie aus dem Energiespeicher versorgbar ist. Durch den Antrieb kann ein Drehmoment an dem Antriebsrad erzeugt werden, wodurch ein Vortrieb der Inspektionsvorrichtung in der Rohrleitung durch ein Abrollen des Antriebsrads auf der Innenwand der Rohrleitung erzeugbar ist.

Es kann im Rahmen der Erfindung vorgesehen sein, dass wenigstens eine Rotoreinheit dazu ausgebildet ist, zumindest temporär, eine Vortriebskraft zum Vortrieb der Inspektionsvorrichtung zu erzeugen. Hierzu kann vorgesehen sein, dass der Generator der Rotoreinheit als ein Elektromotor ausgebildet ist und, zumindest temporär, in einem Motorbetrieb betrieben wird. Die für den Motorbetrieb erforderliche elektrische Energie kann durch einen elektrischen Energiespeicher der Inspektionsvorrichtung bereitgestellt werden.

Es kann im Rahmen der Erfindung ferner vorgesehen sein, dass wenigstens zwei, insbesondere genau zwei, Rotoreinheiten umfasst sind. Wenigstens zwei Rotoreinheiten können baugleich ausgebildet sein bzw. die gleichen Komponenten umfassen. Insbesondere ist denkbar, dass die Drehrichtung der Rotoren wenigstens zweier Rotoreinheiten gegensätzlich bzw. gegenläufig ausgebildet sind. Hierdurch ergibt sich der Vorteil, dass die aufgrund der Rotation der Rotoren auftretenden Drehimpulse sich gegenseitig ausgleichen, wodurch eine stabile und zuverlässige Fortbewegung bzw. Positionierung der Inspektionsvorrichtung innerhalb der Rohrleitung unterstützt werden kann.

Im Rahmen der Erfindung ist es optional möglich, dass wenigstens ein Sensorelement, insbesondere zur Inspektion der Rohrleitung, umfasst ist, wobei insbesondere wenigstens eins der folgenden Sensorelemente umfasst ist:
- Wenigstens ein Bildsensor zur Erfassung von Bildern der Rohrleitung,
- wenigstens ein Temperatursensor zur Erfassung der Temperatur der Rohrleitung,
- wenigstens ein Leckagesensor zur Erfassung einer Leckage an der Rohrleitung,
- wenigstens ein Wandstärkensensor zur Erfassung einer lokalen Wandstärke der Rohrleitung,
- wenigstens ein Risssensor zur Erfassung von Rissen in der Rohrleitung,
- wenigstens ein Positionssensor zur Erfassung einer Position der Inspektionsvorrichtung,
- wenigstens ein Lagesensor zur Erfassung einer räumlichen Lage der Inspektionsvorrichtung.

Als besonders bevorzugt hat es sich dargestellt, wenn mehrere oder sogar alle der genannten Sensorelemente durch die Inspektionsvorrichtung umfasst sind.

Wenigstens ein Bildsensor kann vorliegend als eine Kamera ausgebildet sein. Durch den Bildsensor sind Bilder der Rohrleitung erfassbar, welche vorzugsweise durch einen Benutzer der Inspektionsvorrichtung auswertbar sind. Hierdurch kann eine optische Bewertung der inneren Oberfläche der Rohrleitung durchgeführt werden, wodurch bspw. Verschleißerscheinungen an der Rohrleitungsoberfläche wie Risse oder Versprödung auf einfache Weise feststellbar sind.

Alternativ oder zusätzlich kann wenigstens ein Temperatursensor als ein optischer Temperatursensor, insbesondere als ein Infrarot-Temperatursensor, ausgebildet sein. Hierdurch ergibt sich der Vorteil einer berührungslosen Temperaturmessung der Rohrleitungsoberfläche. Durch die Erfassung der Rohrleitungstemperatur kann festgestellt werden, ob sich die Rohrleitung, bspw. durch äußere Einflüsse, an bestimmten Positionen zu stark erwärmt.

Besonders bevorzugt ist denkbar, dass wenigstens ein Leckagesensor als ein akustischer Leckagesensor ausgebildet ist. Durch den hohen Druck des innerhalb der Rohrleitung geführten Gases entsteht an der Leckageposition, an welcher ein Teil des in der Rohrleitung geführten Gases in die Umgebung entweicht, ein hochfrequenter Ton. Dieser hochfrequente Ton kann durch den akustischen Leckagesensor erfasst und eine Leckage an der Rohrleitung detektiert bzw. eine Leckageposition an der Rohrleitung geortet werden. Ein akustischer Leckagesensor bietet den Vorteil, dass bereits kleine Leckagen zuverlässig detektiert bzw. geortet werden können.

Es ist im Rahmen der Erfindung denkbar, dass wenigstens ein Wandstärkensensor und/oder wenigstens ein Risssensor als ein Magnetfeldsensor und/oder Wirbelstromsensor und/oder Ultraschallsensor ausgebildet ist. Diese Varianten haben sich als vorteilhaft in Bezug auf die Erfassung von Restwandstärken der Rohrleitung sowie Rissen im Rohrleitungsmantel erwiesen.

Es kann ferner vorgesehen sein, dass wenigstens ein Positionssensor als ein GNSS (Global Navigation Satellite System) Sensor ausgebildet ist, insbesondere als ein GPS (Global Positioning System), GLONASS, Beidou oder Galileo Sensor. Zusätzlich oder alternativ kann wenigstens ein Positionssensor als ein Erdfeldmagnetsensor oder Gyroskop oder Beschleunigungssensor ausgebildet sein. Durch die Verwendung von Erdfeldmagnetsensoren bzw. Gyropskopen und/oder Beschleunigungssensoren kann eine Positionsbestimmung im Untergrund auf zuverlässige Weise realisiert werden.

Durch die Erfassung der räumlichen Lage der Inspektionsvorrichtung kann bspw. festgestellt werden, ob eine Fehlpositionierung der Inspektionsvorrichtung innerhalb der Rohrleitung vorliegt.

Es kann im Rahmen der Erfindung vorgesehen sein, dass die Inspektionsvorrichtung wenigstens eine Sensoreinheit umfasst, wobei in die Sensoreinheit wenigstens ein Sensorelement integriert bzw. wobei wenigstens ein Sensorelement durch diese umfasst ist. Insbesondere kann vorgesehen sein, dass mehrere Sensorelemente, insbesondere alle der o. g. Sensorelemente, in die Sensoreinheit integriert bzw. durch diese umfasst sind. Durch die Verwendung einer Sensoreinheit ergibt sich ein kompaktier Aufbau der Inspektionsvorrichtung. Wenigstens ein Sensorelement und/oder wenigstens eine Sensoreinheit kann vorzugsweise an einem Trägerelement der Inspektionsvorrichtung angeordnet bzw. in dieses integriert sein.

Es kann im Rahmen der Erfindung vorgesehen sein, dass die Inspektionsvorrichtung wenigstens ein Trägerelement umfasst. Es kann vorgesehen sein, dass wenigstens eine Rotoreinheit, insbesondere alle Rotoreinheiten, an dem Trägerelement angeordnet bzw. mit diesem verbunden sind. Alternativ oder zusätzlich kann vorgesehen sein, dass wenigstens ein Flügelelement, insbesondere alle Flügelelemente, an dem Trägerelement angeordnet bzw. mit diesem verbunden sind. Wenigstens eine Rotoreinheit und/oder wenigstens ein Flügelelement kann an dem Trägerelement beweglich gelagert sein. Alternativ oder zusätzlich ist denkbar, dass an dem Trägerelement wenigstens ein elektrischer Energiespeicher angeordnet oder in das Trägerelement integriert ist. Zusätzlich oder alternativ ist es denkbar, dass wenigstens ein Sensorelement zur Inspektion der Rohrleitung an dem Trägerelement angeordnet oder in dieses integriert ist. Zusätzlich oder alternativ kann wenigstens eine Steuereinheit und/oder wenigstens eine Sensoreinheit an dem Trägerelement angeordnet bzw. in dieses integriert sein. Zusätzlich oder alternativ ist denkbar, dass an dem Trägerelement, insbesondere an wenigstens einem Teilsegment des Trägerelements wenigstens ein, insbesondere wenigstens zwei oder genau zwei, bevorzugt wenigstens vier oder genau vier, Führungsräder angeordnet sind. Hierdurch kann eine zuverlässige Bewegung bzw. Führung der Inspektionsvorrichtung in der Rohrleitung realisiert werden. Auch eine Verwendung von mehr als vier Führungsrädern, insbesondere wenigstens oder genau 6, wenigstens oder genau 8 oder wenigstens oder genau 10 oder mehr als 10 Führungsrädern ist denkbar. Durch eine verteilte Anordnung von Führungsrädern kann sichergestellt werden, dass die Inspektionsvorrichtung auch in unterschiedlichen Lagen, bspw. nach einem Umkippen, fahrbereit bleibt.

Ferner kann es im Rahmen der Erfindung vorgesehen sein, dass die Inspektionsvorrichtung, wenigstens ein erstes Teilsegment und ein zweites Teilsegment umfasst, wobei das erste Teilsegment und das zweite Teilsegment gelenkig miteinander verbunden sind, sodass das erste Teilsegment relativ zu dem zweiten Teilsegment zumindest abschnittsweise bewegbar ist. Insbesondere kann vorgesehen sein, dass die Inspektionsvorrichtung ein Trägerelement umfasst, wobei vorzugsweise das Trägerelement wenigstens zwei (ein erstes und ein zweites) Teilsegmente umfasst und wobei das erste Teilsegment das zweite Teilsegment gelenkig miteinander verbunden sind, sodass das erste Teilsegment relativ zu dem zweiten Teilsegment zumindest abschnittsweise bewegbar ist. Durch die Verwendung mehrerer gelenkig miteinander verbundener Teilsegmente ergibt sich der Vorteil, dass sich die Inspektionsvorrichtung einfacher und zuverlässiger durch Biegungen und Windungen der Rohrleitung bewegen kann. Hierdurch können die Reichweite sowie die generellen Verwendungsmöglichkeiten der Inspektionsvorrichtung gesteigert werden, da die Rohrleitung quasi unabhängig von deren geometrischem Verlauf durch die Inspektionsvorrichtung befahren und untersucht werden kann. Auch kann durch eine gezielte Verwindung der Teilsegmente zueinander die Inspektionsvorrichtung in einem Knick, einer Abzweigung oder einem Bogen der Rohrleitung verkeilt werden, sodass eine Position der Inspektionsvorrichtung innerhalb der Rohrleitung zumindest temporär gesichert werden kann.

Eine gelenkige Verbindung zwischen wenigstens zwei Teilsegmenten der Inspektionsvorrichtung kann vorzugsweise durch wenigstens ein Drehgelenk und/oder wenigstens ein Schwenkgelenk und/oder wenigstens ein Kugelgelenk ausgebildet sein. Zusätzlich oder alternativ kann wenigstens eine gelenkige Verbindung zwischen wenigstens zwei Teilsegmenten der Inspektionsvorrichtung durch wenigstens ein Vektorgelenk ausgebildet sein. Wenigstens ein Vektorgelenk kann vorzugsweise durch wenigstens zwei miteinander verbundene Taumelscheiben ausgebildet sein. In anderen Worten umfasst jedes der zwei miteinander verbundenen Teilsegmente, insbesondere jeweils an einem Ende des betreffenden Segments, eine Taumelscheibe, wobei die beiden Teilsegmente über die jeweiligen Taumelscheiben miteinander verbunden sind. Als eine Taumelscheibe soll vorliegend ein scheiben- oder ringförmiger Körper flächiger Erstreckung verstanden werden, welcher derart gegenüber dem jeweiligen Teilsegment angewinkelt ist, dass er bei einer Rotation des Teilsegments eine taumelnde Bewegung ausführt. Durch eine Verdrehung der Taumelscheiben der jeweiligen Teilsegmente der Inspektionsvorrichtung relativ zueinander kann so eine Verschränkung der Teilsegmente relativ zueinander vorgenommen werden, um das Passieren von Knicken oder Windungen in der Rohrleitung zu ermöglichen.

Bei einer gelenkigen Verbindung über Taumelscheiben kann es von Vorteil sein, wenn mehrere Führungsräder über den Umfang der Inspektionsvorrichtung, insbesondere eines Trägerelements, verteilt sind, um auch nach einer Verschränkung von zwei Teilsegmenten zueinander eine sichere Positionierung der Inspektionsvorrichtung auf der Innenwand der Rohrleitung zu realisieren.

Wenigstens ein Gelenk bzw. wenigstens eine gelenkige Verbindung kann mit wenigstens einem Aktuator, insbesondere Servomotor, in Wirkverbindung stehen, sodass durch den Aktuator eine Bewegung von wenigstens zwei Teilsegmenten der Inspektionsvorrichtung relativ zueinander durchführbar ist. Hierdurch ergibt sich der Vorteil, dass wenigstens zwei Teilsegmente automatisiert und/oder ferngesteuert relativ zueinander bewegbar sind.

Es kann im Rahmen der Erfindung vorgesehen sein, dass die Inspektionsvorrichtung wenigstens eine Steuereinheit umfasst. Insbesondere kann die Steuereinheit dazu ausgebildet sein die Inspektionsvorrichtung zumindest teilweise zu steuern. Es kann vorzugsweise vorgesehen sein, dass die Steuereinheit in Signalverbindung mit wenigstens einem Sensorelement der Inspektionsvorrichtung steht. So kann bspw. eine Erfassung von Sensorwerten durch das Sensorelement von der Steuereinheit initiiert und/oder beendet werden. Zusätzlich oder alternativ können hierdurch die durch das Sensorelement erfassten Sensorwerte an die Steuereinheit übermittelt werden, wobei insbesondere die Sensorwerte von der Steuereinheit weiterverarbeitet und/oder gespeichert und/oder, insbesondere an ein mobiles Gerät, weiterkommuniziert werden können. Zusätzlich oder alternativ kann vorgesehen sein, dass die Steuereinheit mit wenigstens einem Aktuator der Inspektionsvorrichtung in Signalverbindung steht. So kann der Aktuator durch die Steuereinheit angesteuert und eine entsprechende Bewegung der mit dem Aktuator verbundenen Komponenten erfolgen. Dabei kann es sich bspw. um ein Flügelelement und/oder eine Rotoreinheit und/oder Teilsegmente der Inspektionsvorrichtung handeln. Zusätzlich oder alternativ kann die Steuereinheit mit wenigstens einer Rotoreinheit in Signalverbindung stehen. So kann bspw. die Rotoreinheit, insbesondere ein Elektromotor der Rotoreinheit, durch die Steuereinheit in eine,n Motorbetrieb oder Generatorbetrieb geschaltet werden. Zusätzlich oder alternativ ist denkbar, dass die Steuereinheit mit wenigstens einem Antrieb oder wenigstens einer Rotoreinheit in Wirkverbindung steht, sodass durch die Steuereinheit ein Vortrieb der Inspektionsvorrichtung in der Rohrleitung initiiert und/oder unterbrochen werden kann. Zusätzlich oder alternativ kann die Steuereinheit mit wenigstens einem elektrischen Energiespeicher der Inspektionsvorrichtung in Signalverbindung stehen. So kann bspw. ein aktueller Ladezustand des Energiespeichers und/oder eine aktuelle Betriebstemperatur des Energiespeichers an die Steuereinheit übermittelt und von der Steuereinheit weiterverarbeitet und/oder gespeichert und/oder, insbesondere an ein mobiles Gerät, weiterkommuniziert werden.

Es kann ferner vorgesehen sein, dass die Energieversorgung wenigstens einer Steuereinheit und/oder wenigstens eines Sensorelements und/oder wenigstens eines Aktuators und/oder wenigstens einer Kommunikationseinheit und/oder wenigstens einer Sensoreinheit durch wenigstens einen elektrischen Energiespeicher der Inspektionsvorrichtung erfolgt. Die Verwendung von elektrischen Komponenten innerhalb der Rohrleitung stellt keine Gefahr dar, da, selbst im Falle eines Funkenschlags oder einer Erwärmung der betreffenden Komponenten, keine Entzündung des in der Rohrleitung geführten Fluidstroms aufgrund des Fehlens eines Oxidators erfolgen würde.

Es ist in Bezug auf die vorliegende Erfindung ferner denkbar, dass die Inspektionsvorrichtung wenigstens eine Kommunikationseinheit umfasst, wobei insbesondere die Kommunikationseinheit eine oder mehrere Kommunikationsschnittstellen aufweist. Wenigstens eine Kommunikationsschnittstelle kann vorzugsweise als eine drahtlose Kommunikationsschnittstelle ausgebildet sein, insbesondere als eine WLAN-, Bluetooth-, Funk-, oder Mobilfunk-Schnittstelle. Zusätzlich oder alternativ kann wenigstens eine Kommunikationsschnittstelle als ein Druckimpulsgeber und/oder Magnetfeldmanipulator bzw. Magnetfelderzeuger ausgebildet sein. Entsprechende Signale können zur Kommunikation mit der Inspektionsvorrichtung verwendet werden, insbesondere wenn die Inspektionsvorrichtung sich unter der Erde bzw. im Untergrund befindet.

Es kann vorgesehen sein, dass wenigstens eine Kommunikationseinheit in Signalverbindung mit wenigstens einer Steuereinheit steht. So können Steuerbefehle, insbesondere von einem mobilen Gerät, an die Steuereinheit übermittelt werden und/oder Daten der Inspektionsvorrichtung, wie bspw. eine Inspektionsinformation oder eine Statusinformation, von der Inspektionsvorrichtung bspw. an ein mobiles Gerät übermittelt werden. Zusätzlich oder alternativ kann über die Kommunikationseinheit eine zumindest temporäre Kommunikationsverbindung zu wenigstens einer weiteren Inspektionsvorrichtung hergestellt werden. Es ist im Rahmen der Erfindung denkbar, dass wenigstens eine Kommunikationseinheit in eine Steuereinheit integriert ist bzw. eine Einheit mit dieser bildet. Hierdurch ergibt sich ein besonders einfacher und kompakter Aufbau der Inspektionsvorrichtung.

In Bezug auf die vorliegende Erfindung ist es vorstellbar, dass die Inspektionsvorrichtung gemäß einem erfindungsgemäßen Verfahren, insbesondere gemäß einem Verfahren nach einem der Ansprüche 9 bis 11, betrieben wird.

Die obenstehende Aufgabe wird ferner gelöst durch ein erfindungsgemäßes Inspektionssystem zur, zumindest abschnittsweisen, Inspektion einer fluidführenden Rohrleitung, umfassend wenigstens eine erfindungsgemäße Inspektionsvorrichtung, insbesondere wenigstens eine Inspektionsvorrichtung nach einem der Ansprüche 1 bis 6, sowie wenigstens ein mobiles Gerät, insbesondere eine Fernsteuerung, wobei das mobile Gerät und die Inspektionsvorrichtung zumindest temporär in eine, insbesondere bidirektionale, Kommunikationsverbindung bringbar sind, sodass die Inspektionsvorrichtung zumindest teilweise durch das mobile Gerät steuerbar ist. Das mobile Gerät kann bspw. als ein Mobiltelefon oder ein Tablet oder ein Laptop ausgebildet sein.

Damit ergeben sich in Bezug auf ein erfindungsgemäßes Inspektionssystem die gleichen Vorteile, wie sie bereits in Bezug auf eine erfindungsgemäße Inspektionsvorrichtung beschrieben worden sind.

Das Inspektionssystem erlaubt die Steuerung der Inspektionsvorrichtung durch das mobile Gerät sowie ferner den Empfang von Inspektionsinformationen oder Statusinformationen der Inspektionsvorrichtung durch das mobile Gerät. So kann der Einsatz der Inspektionsvorrichtung aus der Ferne gesteuert und überwacht werden sowie ferner eine Fernauswertung der durch die Inspektionsvorrichtung erfassten Daten erfolgen. Das mobile Gerät kann bspw. durch einen Benutzer bedient werden. Das mobile Gerät kann während einer Leitungsinspektion an der Position verbleiben, an welcher die Inspektionsvorrichtung in die Rohrleitung eingebracht wird und von der sich die Inspektionsvorrichtung im Zuge der Inspektion der Rohrleitung sukzessive entfernt.

Es kann im Rahmen der Erfindung vorgesehen sein, dass das mobile Gerät wenigstens ein Anzeigemittel, insbesondere ein Display, umfasst. So können durch wenigstens eine Inspektionsvorrichtung, insbesondere durch einen Bildsensor der Inspektionsvorrichtung, aufgezeichnete Bilddaten durch das mobile Gerät empfangen und angezeigt werden. Hierdurch kann die ferngesteuerte Bedienung der Inspektionsvorrichtung erheblich vereinfacht werden.

Ferner ist es vorstellbar, dass wenigstens zwei Inspektionsvorrichtungen umfasst sind, wobei insbesondere wenigstens zwei Inspektionsvorrichtungen, zumindest temporär, in einer, insbesondere bidirektionalen, Kommunikationsverbindung stehen. In anderen Worten kann vorgesehen sein, dass das Inspektionssystem mehr als eine, nämlich wenigstens zwei oder mehr als zwei Inspektionsvorrichtungen umfasst. Dabei kann ferner vorgesehen sein, dass wenigstens zwei Inspektionsvorrichtungen, zumindest temporär, in einer, insbesondere bidirektionalen, Kommunikationsverbindung stehen. Hierdurch ergibt sich der Vorteil, dass die Reichweite und Flexibilität des Inspektionssystems gesteigert werden können. So können bspw. mehrere Inspektionsvorrichtungen zeitlich versetzt in die Rohrleitung eingebracht werden. Entfernt sich eine Inspektionsvorrichtung aus der Reichweite des mobilen Geräts, sodass eine unmittelbare Kommunikationsverbindung nicht mehr aufrechterhalten werden kann, kann eine Kommunikationsverbindung zu wenigstens einer weiteren Inspektionsvorrichtung hergestellt werden, welche sich noch in Reichweite des mobilen Geräts befindet. So kann eine Kommunikation zwischen dem mobilen Gerät und wenigstens einer Inspektionsvorrichtung mittelbar über wenigstens eine weitere Inspektionsvorrichtung aufrechterhalten werden, auch wenn sich die in Rede stehende Inspektionsvorrichtung eigentlich außerhalb der unmittelbaren Reichweite des mobilen Geräts befindet.

Die obenstehende Aufgabe wird ferner gelöst durch ein erfindungsgemäßes Verfahren zum Betrieb einer Inspektionsvorrichtung zur, zumindest abschnittsweisen, Inspektion einer fluidführenden Rohrleitung, die Inspektionsvorrichtung umfassend wenigstens einen elektrischen Energiespeicher sowie wenigstens eine Rotoreinheit, wobei die Rotoreinheit wenigstens einen Rotor und wenigstens einen Generator umfasst und wobei der Rotor mit einer Welle des Generators derart in Wirkverbindung steht, dass eine Rotation des Rotors auf die Welle übertragbar ist und wobei der Generator mit dem Energiespeicher derart in Wirkverbindung steht, dass eine durch den Generator erzeugte elektrische Energie zumindest teilweise in dem Energiespeicher speicherbar ist, das Verfahren umfassend:
- Rotieren wenigstens eines Rotors der Inspektionsvorrichtung durch Anströmen des Rotors mit einem in der Rohrleitung geführten Fluid,
- Umwandeln zumindest eines Teils einer Rotationsenergie wenigstens eines Rotors in eine elektrische Energie durch wenigstens einen Generator,
- Speichern zumindest eines Teils der elektrischen Energie in wenigstens einem Energiespeicher der Inspektionsvorrichtung.

Damit ergeben sich in Bezug auf ein erfindungsgemäßes Verfahren die gleichen Vorteile, wie sie bereits in Bezug auf eine erfindungsgemäße Inspektionsvorrichtung und/oder ein erfindungsgemäßes Inspektionssystem beschrieben worden sind. Es kann vorgesehen sein, dass die Inspektionsvorrichtung als eine erfindungsgemäße Inspektionsvorrichtung, insbesondere eine Inspektionsvorrichtung nach einem der Ansprüche 1 bis 6, ausgebildet ist. Durch das erfindungsgemäße Verfahren ergibt sich insbesondere der Vorteil, dass die Reichweite einer einzelnen Inspektionsvorrichtung erheblich gesteigert werden kann, da der Energiespeicher der Inspektionsvorrichtung in regelmäßigen Abständen oder kontinuierlich neu beladen und die Inspektionsvorrichtung im Anschluss oder sogar während des Ladevorgangs ihren Betrieb fortsetzen kann.

Ferner ist im Rahmen der vorliegenden Erfindung denkbar, dass zusätzlich wenigstens eines der folgenden umfasst ist:
- Einbringen der Inspektionsvorrichtung in die Rohrleitung und/oder Ausbringen der Inspektionsvorrichtung aus der Rohrleitung,
- Nutzen zumindest eines Teils der elektrischen Energie aus dem Energiespeicher für einen Vortrieb der Inspektionsvorrichtung, insbesondere zur Fortbewegung in der Rohrleitung,
- Inspizieren wenigstens eines Abschnitts der Rohrleitung durch die Inspektionsvorrichtung, insbesondere wenigstens zur Ortung wenigstens einer Leckage, vorzugsweise durch wenigstens ein Sensorelement der Inspektionsvorrichtung.

Es kann vorgesehen sein, dass das Einbringen und/oder Ausbringen der Inspektionsvorrichtung über wenigstens eine Molchschleuse der Rohrleitung erfolgt. Molchschleusen sind in Gasnetzen verbreitet. Entsprechend ergibt sich der Vorteil, dass auf bestehende Infrastruktur zurückgegriffen werden kann und ein einfaches Ein- bzw. Ausbringen der Inspektionsvorrichtung realisierbar ist. Ferner können die Anzahl vorzusehender Molchschleusen und damit verbundene Kosten aufgrund der hohen Reichweite der Inspektionsvorrichtung reduziert werden.

Der Vortrieb der Inspektionsvorrichtung kann durch wenigstens eine Rotoreinheit erfolgen. Zusätzlich oder alternativ kann der Vortrieb durch wenigstens einen Antrieb der Inspektionsvorrichtung erfolgen, wobei der Antrieb in Wirkverbindung mit wenigstens einem Antriebsrad der Inspektionsvorrichtung steht. Der Vortrieb der Inspektionsvorrichtung kann derart erfolgen, dass sich die Inspektionsvorrichtung mit der Hauptströmungsrichtung des in der Rohrleitung geführten Fluidstroms bewegt. Alternativ kann der Vortrieb der Inspektionsvorrichtung derart erfolgen, dass sich die Inspektionsvorrichtung entgegen der Hauptströmungsrichtung des in der Rohrleitung geführten Fluidstroms bewegt.

Im Rahmen der Erfindung ist es denkbar, dass zusätzlich wenigstens eines der folgenden umfasst ist:
- Erzeugen einer Anpresskraft zwischen der Inspektionsvorrichtung und einer Innenwand der Rohrleitung, insbesondere durch wenigstens ein Kontaktierungselement und/oder wenigstens ein Flügelelement der Inspektionsvorrichtung,
- Blockieren wenigstens eines Führungsrads der Inspektionsvorrichtung, sodass ein Abrollen des Führungsrads auf einer Innenwand der Rohrleitung verhindert wird.

Durch das, zumindest temporäre, Erzeugen einer Anpresskraft und/oder das, zumindest temporäre, Blockieren wenigstens eines Führungsrads der Inspektionsvorrichtung ergibt sich der Vorteil, dass eine sichere Positionierung der Inspektionsvorrichtung innerhalb der Rohrleitung unterstützt werden kann.

Die obenstehende Aufgabe wird ferner gelöst durch ein Verfahren zum Betrieb eines erfindungsgemäßen Inspektionssystems, insbesondere eines Inspektionssystems nach einem der Ansprüche 7 oder 8, umfassend:
- Übertragen wenigstens einer Statusinformation und/oder wenigstens einer Inspektionsinformation von wenigstens einer Inspektionsvorrichtung an das mobile Gerät.

Es kann im Rahmen der Erfindung vorgesehen sein, dass eine Inspektionsinformation wenigstens eines der folgenden umfasst:
- Wenigstens eine, insbesondere durch einen Bildsensor erfasste, Bildinformation,
- wenigstens eine, insbesondere durch einen Temperatursensor erfasste, Temperaturinformation,
- wenigstens eine, insbesondere durch einen Leckagesensor erfasste, Leckageinformation,
- wenigstens eine, insbesondere durch einen Wandstärkensensor erfasste, Wandstärkeninformation,
- wenigstens eine, insbesondere durch einen Risssensor erfasste, Rissinformation.

Dabei kann vorgesehen sein, dass die Temperaturinformation charakteristisch ist für eine, insbesondere lokale, Temperatur der Rohrleitung und/oder dass die Bildinformation ein Bild aus dem Inneren der Rohrleitung ist und/oder dass die Leckageinformation charakteristisch ist für eine, insbesondere lokale, Leckage der Rohrleitung und/oder dass die Wandstärkeninformation charakteristisch ist für eine, insbesondere lokale, Wandstärke der Rohrleitung und/oder dass die Rissinformation charakteristisch ist für einen, insbesondere lokalen, Riss in der Rohrleitung.

Es kann im Rahmen der Erfindung vorgesehen sein, dass eine Statusinformation wenigstens eines der folgenden umfasst:
- wenigstens eine, insbesondere durch einen Positionssensor erfasste, Positionsinformation,
- wenigstens eine, insbesondere durch einen Lagesensor erfasste, Lageinformation,
- wenigstens eine Ladezustandsinformation.

Es ist denkbar, dass die Positionsinformation charakteristisch ist für eine Position der Inspektionsvorrichtung und/oder dass die Lageinformation charakteristisch ist für eine räumliche Lage der Inspektionsvorrichtung und/oder dass die Ladezustandsinformation charakteristisch ist für einen Ladezustand wenigstens eines elektrischen Energiespeichers der Inspektionsvorrichtung.

Insbesondere ist denkbar, dass eine Bildinformation und/oder eine Temperaturinformation und/oder eine Leckageinformation und/oder eine Wandstärkeninformation und/oder eine Rissinformation stets mit einer Positionsinformation kombiniert übertragen werden, sodass eine entsprechende Lokalisierung von Schäden oder Problemen an der Rohrleitung durchführbar ist.

Die obenstehende Aufgabe wird ferner gelöst durch ein erfindungsgemäßes Computerprogrammprodukt umfassend Befehle, die bewirken, dass eine erfindungsgemäße Inspektionsvorrichtung, insbesondere eine Inspektionsvorrichtung nach einem der Ansprüche 1 bis 6, ein erfindungsgemäßes Verfahren, insbesondere ein Verfahren nach einem der Ansprüche 9 bis 11 ausführt.

Damit ergeben sich in Bezug auf ein erfindungsgemäßes Computerprogrammprodukt die gleichen Vorteile, wie sie bereits in Bezug auf eine erfindungsgemäße Inspektionsvorrichtung und/oder ein erfindungsgemäßes Inspektionssystem und/oder ein erfindungsgemäßes Verfahren beschrieben worden sind.

Die obenstehende Aufgabe wird ferner gelöst durch ein computerlesbares Speichermedium, auf dem ein erfindungsgemäßes Computerprogrammprodukt, insbesondere ein Computerprogrammprodukt nach Anspruch 13, gespeichert ist.

Damit ergeben sich in Bezug auf ein erfindungsgemäßes computerlesbares Speichermedium die gleichen Vorteile, wie sie bereits in Bezug auf eine erfindungsgemäße Inspektionsvorrichtung und/oder ein erfindungsgemäßes Inspektionssystem und/oder ein erfindungsgemäßes Verfahren und/oder ein erfindungsgemäßes Computerprogrammprodukt beschrieben worden sind.

Die obenstehende Aufgabe wird ferner gelöst durch ein erfindungsgemäßes Datenträgersignal, das ein erfindungsgemäßes Computerprogrammprodukt, insbesondere ein Computerprogrammprodukt nach Anspruch 13, überträgt.

Damit ergeben sich in Bezug auf ein erfindungsgemäßes Datenträgersignal die gleichen Vorteile, wie sie bereits in Bezug auf eine erfindungsgemäße Inspektionsvorrichtung und/oder ein erfindungsgemäßes Inspektionssystem und/oder ein erfindungsgemäßes Verfahren und/oder ein erfindungsgemäßes Computerprogrammprodukt und/oder ein erfindungsgemäßes computerlesbares Speichermedium beschrieben worden sind.

Weitere Vorteile, Merkmale und Einzelheiten der Erfindung ergeben sich aus der nachfolgenden Beschreibung, in der unter Bezugnahme auf die Zeichnungen mehrere Ausführungsbeispiele der Erfindung im Einzelnen beschrieben sind. Dabei zeigt
- Fig. 1: eine schematische Ansicht einer Inspektionsvorrichtung,
- Fig 2: eine schematische Ansicht einer Inspektionsvorrichtung,
- Fig. 3: eine schematische Ansicht einer Inspektionsvorrichtung,
- Fig. 4: eine schematische Ansicht einer Inspektionsvorrichtung,
- Fig. 5: eine schematische Ansicht einer Gelenkverbindung,
- Fig. 6: eine schematische Ansicht eines Inspektionssystems,
- Fig. 7: eine schematische Ansicht eines Verfahrens und
- Fig. 8: eine schematische Ansicht eines Verfahrens.

In den nachfolgenden Figuren werden für die gleichen technischen Merkmale, auch von unterschiedlichen Ausführungsbeispielen, die identischen Bezugszeichen verwendet.

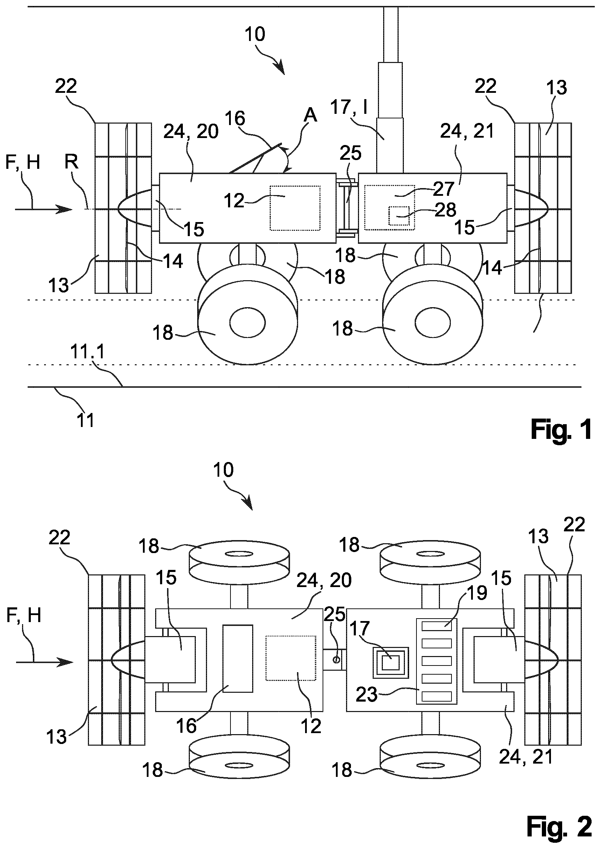

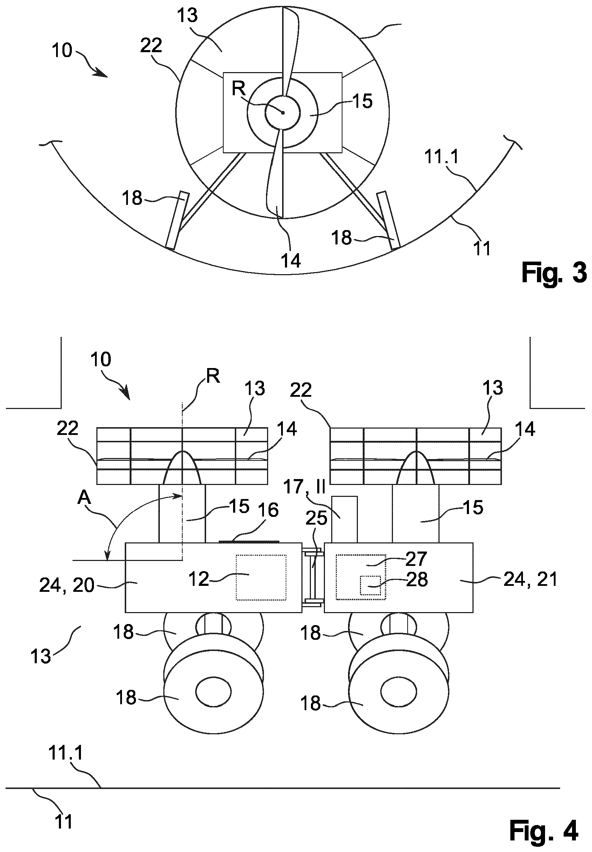

Fig. 1 bis 3 zeigen verschiedene schematische Ansichten einer Inspektionsvorrichtung 10 zur, zumindest abschnittsweise, Inspektion einer fluidführenden Rohrleitung 11. In Fig. 1 ist die Inspektionsvorrichtung 10 in einer Seitenansicht dargestellt. In Fig. 2 ist die Inspektionsvorrichtung 10 in einer Draufsicht dargestellt. In Fig. 3 ist die Inspektionsvorrichtung 10 in einer Frontansicht dargestellt, wobei die Blickrichtung entlang der Hauptströmungsrichtung H eines in der Rohrleitung 11 geführten Fluids F gerichtet ist.

Die Inspektionsvorrichtung 10 umfasst einen elektrischen Energiespeicher 12 sowie wenigstens eine Rotoreinheit 13. Die Rotoreinheit 13 umfasst einen Rotor 14 sowie einen Generator 15, wobei der Rotor 14 mit einer (nicht dargestellten) Welle des Generators 15 derart in Wirkverbindung steht, dass eine Rotation des Rotors 14 auf die Welle des Generators 15 übertragbar ist. Der Generator 15 steht ferner mit dem elektrischen Energiespeicher 12 derart in Wirkverbindung, dass eine durch den Generator 15 erzeugte elektrische Energie zumindest teilweise in dem Energiespeicher 12 speicherbar ist.

Insbesondere kann eine elektrische Wirkverbindung zwischen dem Generator 15 und dem Energiespeicher 12 (genau wie weitere elektrische Verbindungen oder Signalverbindungen) durch ein oder mehrere Kabel hergestellt werden.

Eine erfindungsgemäße Inspektionsvorrichtung 10 bietet den Vorteil, dass durch wenigstens eine Rotoreinheit 13 die kinetische Energie eines in Rohrleitung 11 geführten Fluidstroms F zumindest teilweise in elektrische Energie umgewandelt und in dem Energiespeicher 12 der Inspektionsvorrichtung 10 gespeichert werden kann. Anschließend steht diese elektrische Energie für den Betrieb der Inspektionsvorrichtung 10 zur Verfügung. Insbesondere kann die in dem Energiespeicher 12 verfügbare elektrische Energie zum Vortrieb der Inspektionsvorrichtung 10 innerhalb der Rohrleitung 11, aber auch für den Betrieb weiterer Systeme der Inspektionsvorrichtung 10, genutzt werden.

Der Generator 15 ist vorliegend als ein Elektromotor ausgebildet und kann sowohl im Motorbetrieb als auch im Generatorbetrieb betrieben werden. Somit kann durch die Rotoreinheit 13 einerseits elektrische Energie aus der Bewegungsenergie des in der Rohrleitung 11 geführten Fluidstroms 11 gewonnen werden und andererseits eine Vortriebskraft für einen Vortrieb der Inspektionsvorrichtung 10 erzeugt werden.

Vorliegend umfasst die Inspektionsvorrichtung 10 zwei Rotoreinheiten 13, wobei die Drehrichtung der Rotoren 14 der Rotoreinheiten 13 gegenläufig ausgebildet ist. Hierdurch ergibt sich der Vorteil, dass die aufgrund der Rotation der Rotoren 14 auftretenden Drehimpulse sich gegenseitig ausgleichen, wodurch eine stabile und zuverlässige Fortbewegung bzw. Positionierung der Inspektionsvorrichtung 10 innerhalb der Rohrleitung 11 unterstützt werden kann.

Aus Fig. 1-3 wird ferner ersichtlich, dass die Inspektionsvorrichtung 10 wenigstens ein Flügelelement 16 umfasst, wobei durch eine Anströmung des Flügelelements 16 durch das in der Rohrleitung 11 geführte Fluid F eine Anpresskraft zwischen der Inspektionsvorrichtung 10 und einer Innenwand 11.1 der Rohrleitung 11 erzeugbar ist. Durch die Erzeugung einer Anpresskraft kann die Inspektionsvorrichtung 10 in Bezug auf ihre Positionierung in der Rohrleitung 11 gesichert werden.

Insbesondere aus Fig. 1 und 4 wird ersichtlich, dass das Flügelelement 16 zumindest abschnittsweise bewegbar ist, sodass ein Anstellwinkel A des Flügelelements 16 veränderbar ist. Hierdurch ergibt sich der Vorteil, dass die durch das Flügelelement 16 in Wechselwirkung mit dem in der Rohrleitung 11 geführten Fluidstrom F erzeugte Anpresskraft in Abhängigkeit des Anstellwinkels A des Flügelelements 16 zumindest teilweise variiert werden kann. Gleichzeitig ergibt sich der Vorteil, dass auch der durch das Flügelelement 16 erzeugte Widerstand in dem Fluidstrom F variierbar ist.

Das Flügelelement 16 steht vorliegend mit einem nicht näher dargestellten Aktuator in Wirkverbindung, wobei das Flügelelement 16 durch den Aktuator zumindest abschnittsweise bewegbar ist. Ferner ist das Flügelelement 16 als eine ebene Platte ausgebildet.

Ferner umfasst die Inspektionsvorrichtung 10 wenigstens ein Kontaktierungselement 17, wobei durch eine Kontaktierung einer Innenwand 11.1 der Rohrleitung 11 durch das Kontaktierungselement 17 eine Anpresskraft zwischen der Inspektionsvorrichtung 10 und der Innenwand 11.1 der Rohrleitung 11 erzeugbar ist. Durch die Verwendung eines Kontaktierungselements 17 ergibt sich der Vorteil, dass eine sichere Positionierung der Inspektionsvorrichtung 10 innerhalb der Rohrleitung 11 unterstützt werden kann.

Das Kontaktierungselement 17 ist vorliegend als Teleskopmechanismus ausgebildet und kann von einem Aktivzustand I (Fig. 1) in einen Passivzustand II (Fig. 4) und umgekehrt überführt werden. Dabei erfolgt im Aktivzustand I eine Kontaktierung der Innenwand 11.1 der Rohrleitung 11 durch das Kontaktierungselement 17 und somit die Erzeugung einer Anpresskraft. Im Passivzustand II erfolgt hingegen keine Kontaktierung der Innenwand 11.1 der Rohrleitung 11 und somit auch keine Erzeugung einer Anpresskraft.

Vorliegend steht das Kontaktierungselement 17 mit wenigstens einem (nicht näher dargestellten) Aktuator in Wirkverbindung, sodass das Kontaktierungselement 17 durch den Aktuator von der Aktivposition in die Passivposition und umgekehrt bewegbar ist.

Aus Fig. 1 und 4 wird ferner ersichtlich, dass die Rotoreinheiten 13 der Inspektionsvorrichtung 10 zumindest abschnittsweise bewegbar ist, sodass ein Anstellwinkel A der Rotoren 14 bzw. der Rotoreinheiten 13 zumindest abschnittsweise veränderbar ist. Hierzu stehen die Rotoreinheiten 13 der Inspektionsvorrichtungen 10 jeweils mit einem (nicht explizit dargestellten) Aktuator in Wirkverbindung, sodass die Rotoreinheiten 13 durch den Aktuator zumindest abschnittsweise bewegbar sind.

Beide Rotoreinheiten 13 der Inspektionsvorrichtung 10 sind zwischen einer ersten Position (Fig. 1) und einer zweiten Position (Fig. 4) stufenlos bewegbar, wobei die Rotationsachse R der Rotoren 14 in der ersten Position orthogonal zu den Rotationsachsen R der Rotoren 14 in der zweiten Position orientiert sind. Hierdurch können die Rotoreinheiten 13 sowohl für einen Vortrieb für eine fahrende Fortbewegung der Inspektionsvorrichtung 10 innerhalb der Rohrleitung 11 (Fig. 1) als auch für einen Flugmodus der Inspektionsvorrichtung 10 (Fig. 4) verwendet werden.

Die Rotoren 14 der Rotoreinheiten 13 sind vorliegend als Propeller mit zwei Rotorblättern ausgebildet. Ferner umfassen die Rotoreinheiten 13 jeweils ein Käfigelement 22, wobei das Käfigelement 22 den Rotor 14 zumindest abschnittsweise umschließt und sich entlang des Umfangs des Rotors 14 erstreckt. Durch die Verwendung eines Käfigelements 22 ergibt sich der Vorteil, dass ein Anstreifen des Rotors 14 an der Innenwand 11.1 der Rohrleitung 11 effektiv verhindert werden kann. Ferner hat sich die Verwendung eines Käfigelements als Einführungshilfe und/oder als Leitelement für die Überwindung von Verschmutzungen, Schweißwulsten, Kanten oder Absperrarmaturen in der Rohrleitung als vorteilhaft erwiesen.

Ferner wird aus Fig. 1 bis 4 ersichtlich, dass die Inspektionsvorrichtung 10 wenigstens ein Führungsrad 18 zur Führung der Inspektionsvorrichtung 10 entlang der Rohrleitung 11 umfasst. Vorliegend ist wenigstens ein Führungsrad 18 durch eine (nicht explizit dargestellte) Bremse, zumindest temporär blockierbar. Hierzu steht wenigstens ein Führungsrad 18 mit einem (nicht explizit dargestellten) Bremsaktuator in Wirkverbindung, sodass durch den Bremsaktuator das Führungsrad 18 blockierbar ist.

Mit Bezug zu Fig. 1 bis 4 wird eine Vortriebskraft für eine Bewegung der Inspektionsvorrichtung 10 innerhalb der Rohrleitung 11 durch die Rotoreinheiten 13 bzw. die Rotoren 14 erzeugt. Alternativ oder zusätzlich kann jedoch auch vorgesehen sein, dass wenigstens ein Führungsrad 18 als ein Vortriebsrad ausgebildet ist und durch einen Antrieb, insbesondere einen Elektromotor, antreibbar ist.

Aus Fig. 1 bis 4 wird ferner ersichtlich, dass die Inspektionsvorrichtung 10 wenigstens ein Trägerelement 24 umfasst. An dem Trägerelement 24 sind die beiden Rotoreinheiten 13 sowie ferner auch das Flügelelement 16 und das Kontaktierungselement 17 angeordnet. Auch der Energiespeicher 12 ist in das Trägerelement 24 integriert.

Vorliegend umfasst das Trägerelement 24 ein erstes Teilsegment 20 sowie ein zweites Teilsegment 21, wobei die beiden Teilsegmente 20, 21 über ein Schwenkgelenk 25 gelenkig miteinander verbunden sind, sodass das erste Teilsegment 20 relativ zu dem zweiten Teilsegment 21 zumindest abschnittsweise bewegbar ist. Durch die Verwendung mehrerer gelenkig miteinander verbundener Teilsegmente 20, 21 ergibt sich der Vorteil, dass sich die Inspektionsvorrichtung 10 einfacher und zuverlässiger durch Biegungen bzw. Windungen der Rohrleitung 11 bewegen kann.

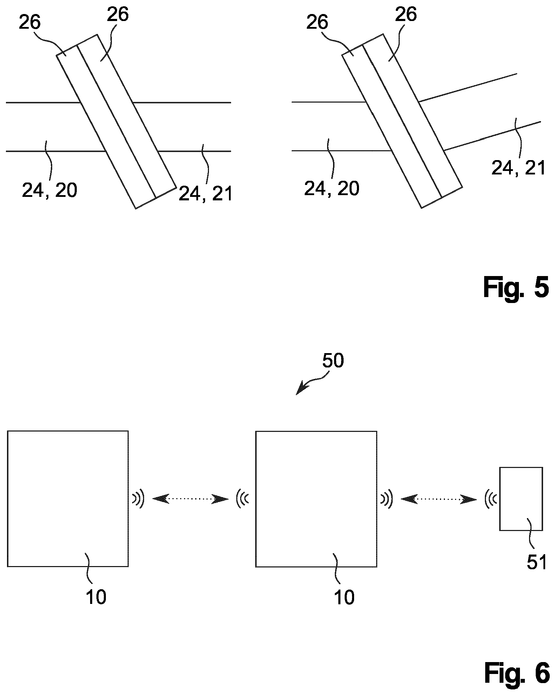

Fig. 5 zeigt eine alternative Gelenkverbindung zwischen zwei Teilsegmenten 20, 21 der Inspektionsvorrichtung 10 bzw. des Trägerelements 24. Jedes der zwei miteinander verbundenen Teilsegmente 20, 21 umfasst eine Taumelscheibe 26, wobei die beiden Teilsegmente 20, 21 über die jeweiligen Taumelscheiben 26 miteinander verbunden sind. Die Taumelscheiben 26 sind gegenüber dem jeweiligen Teilsegment 20, 21 angewinkelt. Werden die Taumelscheiben 26 nun relativ zueinander verdreht, erfolgt eine Verschränkung der Teilsegmente 20, 21, um das Passieren von Knicken oder Windungen in der Rohrleitung 11 zu ermöglichen. Dies ist durch die Darstellungen auf der linken und rechten Seite der Fig. 5 schematisch dargestellt.

Aus Fig. 2 wird ferner ersichtlich, dass die Inspektionsvorrichtung 10 wenigstens eine Sensoreinheit 23 umfasst, wobei die Sensoreinheit 23 wiederum wenigstens ein Sensorelement 19 umfasst und an dem Trägerelement 24 angeordnet ist. Ferner umfasst die Inspektionsvorrichtung 10 wenigstens eine Steuereinheit 27, wobei die Steuereinheit 27 dazu ausgebildet ist die Inspektionsvorrichtung 10 teilweise zu steuern. Die Energieversorgung der Steuereinheit 27 erfolgt durch den Energiespeicher 12, wobei hierzu verwendeten Kabelverbindungen aus Gründen der Übersicht nicht explizit dargestellt sind. Auch umfasst die Inspektionsvorrichtung 10 wenigstens eine Kommunikationseinheit 28, welche vorliegend in die Steuereinheit 27 integriert ist. Für einen möglichst kompakten Aufbau sind vorliegend die Steuereinheit 27 und der Energiespeicher 12 in das Trägerelement 24 der Inspektionsvorrichtung 10 integriert.

Fig. 6 zeigt eine schematische Ansicht eines Inspektionssystems 50. Das Inspektionssystem 50 umfasst vorliegend zwei Inspektionsvorrichtungen 10 sowie ferner wenigstens ein mobiles Gerät 51. Das mobile Gerät 51 und wenigstens eine Inspektionsvorrichtung 10 stehen zumindest temporär in einer, insbesondere bidirektionalen, Kommunikationsverbindung, sodass die Inspektionsvorrichtung 10 zumindest teilweise durch das mobile Gerät 51 steuerbar ist.

Ferner ist Fig. 6 zu entnehmen, dass wenigstens eine Inspektionsvorrichtung 10 nicht unmittelbar mit dem mobilen Gerät 51 in einer, insbesondere bidirektionalen, Kommunikationsverbindung steht, sondern lediglich mittelbar über eine, insbesondere bidirektionale, Kommunikationsverbindung zu einer weiteren Inspektionsvorrichtung 10. Hierdurch ergibt sich der Vorteil, dass die Reichweite und Flexibilität des Inspektionssystems 50 gesteigert werden kann.

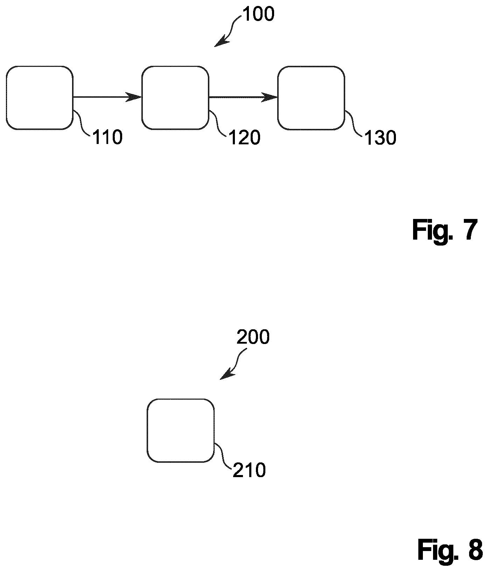

Fig. 7 zeigt ferner ein Verfahren 100 zum Betrieb einer Inspektionsvorrichtung 10 zur, zumindest abschnittsweisen, Inspektion einer fluidführenden Rohrleitung 11, die Inspektionsvorrichtung 10 umfassend wenigstens einen elektrischen Energiespeicher 12 sowie wenigstens eine Rotoreinheit 13, wobei die Rotoreinheit 13 wenigstens einen Rotor 14 und wenigstens einen Generator 15 umfasst und wobei der Rotor 14 mit einer Welle des Generators 15 derart in Wirkverbindung steht, dass eine Rotation des Rotors 14 auf die Welle übertragbar ist und wobei der Generator 15 mit dem Energiespeicher 12 derart in Wirkverbindung steht, dass eine durch den Generator 15 erzeugte elektrische Energie zumindest teilweise in dem Energiespeicher 12 speicherbar ist, das Verfahren 100 umfassend:
- Rotieren 110 des Rotors 14 der Inspektionsvorrichtung 10 durch Anströmen des Rotors 14 mit einem in der Rohrleitung 11 geführten Fluid F,
- Umwandeln 120 zumindest eines Teils einer Rotationsenergie des Rotors 14 in eine elektrische Energie durch den Generator 15,
- Speichern 130 zumindest eines Teils der elektrischen Energie in dem Energiespeicher 12 der Inspektionsvorrichtung 10.

Fig. 8 zeigt ferner ein Verfahren 200 zum Betrieb eines Inspektionssystems 50 umfassend:
- Übertragen 210 wenigstens einer Statusinformation und/oder wenigstens einer Inspektionsinformation von wenigstens einer Inspektionsvorrichtung 10 an das mobile Gerät 51.

### Bezugszeichenliste

- 10: Inspektionsvorrichtung
- 11: Rohrleitung
- 11.1: Innenwand
- 12: Energiespeicher
- 13: Rotoreinheit
- 14: Rotor
- 15: Generator
- 16: Flügelelement
- 17: Kontaktierungselement
- 18: Führungsrad
- 19: Sensorelement
- 20: erstes Teilsegment
- 21: zweites Teilsegment
- 22: Käfigelement
- 23: Sensoreinheit
- 24: Trägerelement
- 25: Schwenkgelenk
- 26: Taumelscheibe
- 27: Steuereinheit
- 28: Kommunikationseinheit

- 50: Inspektionssystem
- 51: mobiles Gerät (Fernsteuerung)

- 100: Verfahren
- 110: Rotieren
- 120: Umwandeln
- 130: Speichern

- 200: Verfahren
- 210: Übertragen
- A: Anstellwinkel
- F: Fluid / Fluidstrom

- I: Aktivzustand
- II: Passivzustand

## Patentansprüche

1. Inspektionsvorrichtung (10) zur, zumindest abschnittsweisen, Inspektion einer fluidführenden Rohrleitung (11), umfassend wenigstens einen elektrischen Energiespeicher (12) sowie wenigstens eine Rotoreinheit (13), wobei die Rotoreinheit (13) wenigstens einen Rotor (14) und wenigstens einen Generator (15) umfasst und wobei der Rotor (14) mit einer Welle des Generators (15) derart in Wirkverbindung steht, dass eine Rotation des Rotors (14) auf die Welle übertragbar ist und wobei der Generator (15) mit dem Energiespeicher (12) derart in Wirkverbindung steht, dass eine durch den Generator (15) erzeugte elektrische Energie zumindest teilweise in dem Energiespeicher (12) speicherbar ist, **dadurch gekennzeichnet, dass** wenigstens ein Rotor (14) zwischen einer ersten Position und einer zweiten Position bewegbar ist, wobei eine Rotationsachse (R) des Rotors (14) in der ersten Position orthogonal zu der Rotationsachse (R) des Rotors (14) in der zweiten Position orientiert ist.

2. Inspektionsvorrichtung (10) nach Anspruch 1,
**dadurch gekennzeichnet,**
**dass** wenigstens eine Flügelelement (16) umfasst ist, wobei durch eine Anströmung des Flügelelements (16) durch das in der Rohrleitung (11) geführte Fluid (F) eine Anpresskraft zwischen der Inspektionsvorrichtung (10) und einer Innenwand (11.1) der Rohrleitung (11) erzeugbar ist, wobei insbesondere wenigstens ein Flügelelement (16) zumindest abschnittsweise bewegbar ist, sodass ein Anstellwinkel (A) des Flügelelements (16) veränderbar ist.

3. Inspektionsvorrichtung (10) nach einem der vorhergehenden Ansprüche,
**dadurch gekennzeichnet,**
**dass** wenigstens ein Kontaktierungselement (17) umfasst ist, wobei durch eine Kontaktierung einer Innenwand (11.1) der Rohrleitung (11) durch das Kontaktierungselement (17) eine Anpresskraft zwischen der Inspektionsvorrichtung (10) und der Innenwand (11.1) der Rohrleitung (11) erzeugbar ist, wobei insbesondere wenigstens ein Kontaktierungselement (17) von einem Aktivzustand (I) in einen Passivzustand (II) und umgekehrt überführbar ist.

4. Inspektionsvorrichtung (10) nach einem der vorhergehenden Ansprüche,
**dadurch gekennzeichnet,**
**dass** die Inspektionsvorrichtung (10) wenigstens ein Führungsrad (18) zur Führung der Inspektionsvorrichtung (10) entlang der Rohrleitung (11) umfasst, wobei insbesondere wenigstens ein Führungsrad (18), zumindest temporär blockierbar ist.

5. Inspektionsvorrichtung (10) nach einem der vorhergehenden Ansprüche,
**dadurch gekennzeichnet,**
**dass** wenigstens ein Sensorelement (19) zur Inspektion der Rohrleitung (11) umfasst ist, wobei insbesondere wenigstens eins der folgenden Sensorelemente (19) umfasst ist:
- Wenigstens ein Bildsensor zur Erfassung von Bildern der Rohrleitung (11),
- wenigstens ein Temperatursensor zur Erfassung der Temperatur der Rohrleitung (11),
- wenigstens ein Leckagesensor zur Erfassung einer Leckage an der Rohrleitung (11),
- wenigstens ein Wandstärkensensor zur Erfassung einer lokalen Wandstärke der Rohrleitung (11).

6. Inspektionsvorrichtung (10) nach einem der vorhergehenden Ansprüche,
**dadurch gekennzeichnet,**
**dass** die Inspektionsvorrichtung (10) wenigstens ein erstes Teilsegment (20) und ein zweites Teilsegment (21) umfasst, wobei das erste Teilsegment (20) und das zweite Teilsegment (21) gelenkig miteinander verbunden sind, sodass das erste Teilsegment (20) relativ zu dem zweiten Teilsegment (21) zumindest abschnittsweise bewegbar ist.

7. Inspektionssystem (50) zur, zumindest abschnittsweisen, Inspektion einer fluidführenden Rohrleitung (11), umfassend wenigstens eine Inspektionsvorrichtung (10) nach einem der vorhergehenden Ansprüche sowie wenigstens ein mobiles Gerät (51), insbesondere eine Fernsteuerung, wobei das mobile Gerät (51) und die Inspektionsvorrichtung (10) zumindest temporär in eine, insbesondere bidirektionale, Kommunikationsverbindung bringbar sind, sodass die Inspektionsvorrichtung (10) zumindest teilweise durch das mobile Gerät (51) steuerbar ist.

8. Inspektionssystem (50) nach Anspruch 7,
**dadurch gekennzeichnet,**
**dass** wenigstens zwei Inspektionsvorrichtungen (10) umfasst sind, und wobei wenigstens zwei Inspektionsvorrichtungen (10), zumindest temporär, in einer, insbesondere bidirektionalen, Kommunikationsverbindung stehen.

9. Verfahren (100) zum Betrieb einer Inspektionsvorrichtung (10) nach einem der Ansprüche 1 bis 6, das Verfahren (100) umfassend:
- Rotieren (110) des Rotors (14) der Inspektionsvorrichtung (10) durch Anströmen des Rotors (14) mit einem in der Rohrleitung (11) geführten Fluid (F),
- Umwandeln (120) zumindest eines Teils einer Rotationsenergie des Rotors (14) in eine elektrische Energie durch den Generator (15),
- Speichern (130) zumindest eines Teils der elektrischen Energie in dem Energiespeicher (12) der Inspektionsvorrichtung (10).

10. Verfahren (100) nach Anspruch 9,
**dadurch gekennzeichnet,**
**dass** zusätzlich wenigstens eines der folgenden umfasst ist:
- Nutzen zumindest eines Teils der elektrischen Energie aus dem Energiespeicher (12) für einen Vortrieb der Inspektionsvorrichtung (10),
- Inspizieren wenigstens eines Abschnitts der Rohrleitung (11) durch die Inspektionsvorrichtung (10), vorzugsweise zur Ortung wenigstens einer Leckage, insbesondere durch wenigstens ein Sensorelement (19) der Inspektionsvorrichtung (10).

11. Verfahren (100) nach einem der Ansprüche 9 bis 10,
**dadurch gekennzeichnet,**
**dass** zusätzlich wenigstens eines der folgenden umfasst ist:
- Erzeugen einer Anpresskraft zwischen der Inspektionsvorrichtung (10) und einer Innenwand (11.1) der Rohrleitung (11), insbesondere durch wenigstens ein Kontaktierungselement (17) und/oder wenigstens ein Flügelelement (16) der Inspektionsvorrichtung (10),
- Blockieren wenigstens eines Führungsrads (18) der Inspektionsvorrichtung (10), sodass ein Abrollen des Führungsrads (18) auf einer Innenwand (11.1) der Rohrleitung (11) verhindert wird.

12. Verfahren (200) zum Betrieb eines Inspektionssystems (50) nach einem der Ansprüche 7 oder 8, umfassend:
- Übertragen (210) wenigstens einer Statusinformation und/oder wenigstens einer Inspektionsinformation von wenigstens einer Inspektionsvorrichtung (10) an das mobile Gerät (51).

13. Computerprogrammprodukt umfassend Befehle, die bewirken, dass die Inspektionsvorrichtung (10) nach einem der Ansprüche 1 bis 6 ein Verfahren (100) nach einem der Ansprüche 9 bis 11 ausführt.

14. Computerlesbares Speichermedium, auf dem ein Computerprogrammprodukt nach Anspruch 13 gespeichert ist.

15. Datenträgersignal, das ein Computerprogrammprodukt nach Anspruch 13 überträgt.

## Claims

1. An inspection device (10) for inspecting, at least in sections, a fluid-carrying pipeline (11), comprising at least one electrical energy storage device (12) and at least one rotor unit (13), wherein the rotor unit (13) comprises at least one rotor (14) and at least one generator (15), and wherein the rotor (14) is operatively connected to a shaft of the generator (15) such that rotation of the rotor (14) can be transmitted to the shaft, and wherein the generator (15) is operatively connected to the energy storage device (12) such that electrical energy generated by the generator (15) can be stored at least partially in the energy storage device (12), **characterized in that** at least one rotor (14) is movable between a first position and a second position, wherein an axis of rotation (R) of the rotor (14) in the first position is oriented orthogonally to the axis of rotation (R) of the rotor (14) in the second position.

2. Inspection device (10) according to claim 1, **characterized in that** it comprises at least one wing element (16), wherein a contact force between the inspection device (10) and an inner wall (11.1) of the pipeline (11) can be generated by a flow of the fluid (F) carried in the pipeline (11) against the wing element (16), wherein, in particular, at least one wing element (16) is movable at least in sections, such that an angle of attack (A) of the wing element (16) can be varied.

3. Inspection device (10) according to any one of the preceding claims, **characterized in that** at least one contact element (17) is included, wherein a contact force between the inspection device (10) and the inner wall (11.1) of the pipeline (11) can be generated by a contacting of an inner wall (11.1) of the pipeline (11) by the contact element (17), wherein, in particular, at least one contact element (17) can be switched from an active state (I) to a passive state (II) and vice versa.

4. Inspection device (10) according to any one of the preceding claims, **characterized in that** the inspection device (10) comprises at least one guide wheel (18) for guiding the inspection device (10) along the pipeline (11), wherein, in particular, at least one guide wheel (18) can be locked, at least temporarily.

5. Inspection device (10) according to any one of the preceding claims, **characterized in that** it comprises at least one sensor element (19) for inspecting the pipeline (11), wherein, in particular, at least one of the following sensor elements (19) is included:
- at least one image sensor for capturing images of the pipeline (11),
- at least one temperature sensor for detecting the temperature of the pipeline (11),
- at least one leak sensor for detecting a leak in the pipeline (11),
- at least one wall thickness sensor for detecting a local wall thickness of the pipeline (11).

6. Inspection device (10) according to any one of the preceding claims, **characterized in that** the inspection device (10) comprises at least a first partial segment (20) and a second partial segment (21), wherein the first partial segment (20) and the second partial segment (21) are hinged together such that the first partial segment (20) is movable relative to the second partial segment (21) at least in sections.

7. An inspection system (50) for inspecting, at least in sections, a fluid-carrying pipeline (11), comprising at least one inspection device (10) according to any one of the preceding claims, as well as at least one mobile device (51), in particular a remote control, wherein the mobile device (51) and the inspection device (10) can be brought into at least a temporary, in particular bidirectional, communication connection, such that the inspection device (10) can be controlled at least in part by the mobile device (51).

8. Inspection system (50) according to claim 7, **characterized in that** it comprises at least two inspection devices (10), and wherein at least two inspection devices (10) are, at least temporarily, in a, in particular bidirectional, communication link.

9. A method (100) for operating an inspection device (10) according to any one of claims 1 through 6, the method (100) comprising:
- rotating (110) the rotor (14) of the inspection device (10) by directing a fluid (F) flowing through the pipeline (11) onto the rotor (14),
- converting (120) at least a portion of the rotational energy of the rotor (14) into electrical energy via the generator (15),
- storing (130) at least a portion of the electrical energy in the energy storage device (12) of the inspection device (10).

10. Method (100) according to claim 9, **characterized in that** it additionally comprises at least one of the following:
- using at least a portion of the electrical energy from the energy storage device (12) to propel the inspection device (10),
- inspecting at least one section of the pipeline (11) using the inspection device (10), preferably to locate at least one leak, in particular using at least one sensor element (19) of the inspection device (10).

11. A method (100) according to any one of claims 9 through 10, **characterized in that** it additionally comprises at least one of the following:
- generating a contact force between the inspection device (10) and an inner wall (11.1) of the pipeline (11), in particular by means of at least one contact element (17) and/or at least one wing element (16) of the inspection device (10),
- locking at least one guide wheel (18) of the inspection device (10) so that the guide wheel (18) is prevented from rolling along an inner wall (11.1) of the pipeline (11).

12. A method (200) for operating an inspection system (50) according to any one of claims 7 or 8, comprising:
- transmitting (210) at least one piece of status information and/or at least one piece of inspection information from at least one inspection device (10) to the mobile device (51).

13. A computer program product comprising instructions that cause the inspection device (10) according to any one of claims 1 through 6 to perform a method (100) according to any one of claims 9 through 11.

14. A computer-readable storage medium on which a computer program product according to claim 13 is stored.

15. A data carrier signal that transmits a computer program product according to claim 13.

## Revendications

1. Dispositif d'inspection (10) destiné à l'inspection, au moins par sections, d'une conduite de fluide (11), comprenant au moins un accumulateur d'énergie électrique (12) ainsi qu'au moins une unité de rotor (13), l'unité de rotor (13) comprenant au moins un rotor (14) et au moins un générateur (15), et le rotor (14) étant en liaison active avec un arbre du générateur (15) de telle sorte qu'une rotation du rotor (14) puisse être transmise à l'arbre, et le générateur (15) étant en liaison active avec l'accumulateur d'énergie (12) de telle sorte qu'une énergie électrique produite par le générateur (15) puisse être stockée au moins en partie dans l'accumulateur d'énergie (12), **caractérisé en ce qu'**au moins un rotor (14) est mobile entre une première position et une deuxième position, l'axe de rotation (R) du rotor (14) dans la première position étant orienté orthogonalement par rapport à l'axe de rotation (R) du rotor (14) dans la deuxième position.

2. Dispositif d'inspection (10) selon la revendication 1, **caractérisé en ce qu'**il comprend au moins un élément d'aile (16), une force d'appui pouvant être générée entre le dispositif d'inspection (10) et une paroi intérieure (11.1) de la conduite (11) par un écoulement du fluide (F) acheminé dans la conduite (11) sur l'élément d'aile (16), au moins un élément d'aile (16) étant notamment mobile au moins par sections, de sorte qu'un angle d'attaque (A) de l'élément d'aile (16) peut être modifié.

3. Dispositif d'inspection (10) selon l'une des revendications précédentes, **caractérisé en ce qu'**il comprend au moins un élément de contact (17), une force d'appui pouvant être générée entre le dispositif d'inspection (10) et la paroi intérieure (11.1) de la conduite (11) par une mise en contact d'une paroi intérieure (11.1) de la conduite (11) par l'élément de contact (17), au moins un élément de contact (17) pouvant notamment passer d'un état actif (I) à un état passif (II) et inversement.

4. Dispositif d'inspection (10) selon l'une des revendications précédentes, **caractérisé en ce que** le dispositif d'inspection (10) comprend au moins une roue de guidage (18) destinée à guider le dispositif d'inspection (10) le long de la conduite (11), au moins une roue de guidage (18) pouvant notamment être bloquée, au moins temporairement.

5. Dispositif d'inspection (10) selon l'une des revendications précédentes, **caractérisé en ce qu'**il comprend au moins un élément capteur (19) destiné à l'inspection de la conduite (11), comprenant notamment au moins l'un des éléments capteurs (19) suivants :
- au moins un capteur d'images destiné à la capture d'images de la conduite (11),
- au moins un capteur de température destiné à détecter la température de la conduite (11),
- au moins un capteur de fuite destiné à détecter une fuite sur la conduite (11),
- au moins un capteur d'épaisseur de paroi destiné à détecter une épaisseur de paroi locale de la conduite (11).

6. Dispositif d'inspection (10) selon l'une des revendications précédentes, **caractérisé en ce que** le dispositif d'inspection (10) comprend au moins un premier segment partiel (20) et un deuxième segment partiel (21), le premier segment partiel (20) et le deuxième segment partiel (21) étant reliés entre eux de manière articulée, de sorte que le premier segment partiel (20) puisse se déplacer, au moins par sections, par rapport au deuxième segment partiel (21).

7. Système d'inspection (50) destiné à l'inspection, au moins par sections, d'une conduite de fluide (11), comprenant au moins un dispositif d'inspection (10) selon l'une des revendications précédentes ainsi qu'au moins un appareil mobile (51), notamment une télécommande, l'appareil mobile (51) et le dispositif d'inspection (10) pouvant être mis, au moins temporairement, en liaison de communication, notamment bidirectionnelle, de sorte que le dispositif d'inspection (10) puisse être commandé, au moins en partie, par l'appareil mobile (51).

8. Système d'inspection (50) selon la revendication 7, **caractérisé en ce qu'**il comprend au moins deux dispositifs d'inspection (10), et dans lequel au moins deux dispositifs d'inspection (10) sont, au moins temporairement, en liaison de communication, notamment bidirectionnelle.

9. Procédé (100) de mise en œuvre d'un dispositif d'inspection (10) selon l'une des revendications 1 à 6, le procédé (100) comprenant :
- la mise en rotation (110) du rotor (14) du dispositif d'inspection (10) par l'écoulement, sur le rotor (14), d'un fluide (F) acheminé dans la conduite (11),
- la conversion (120) d'au moins une partie de l'énergie de rotation du rotor (14) en énergie électrique par le générateur (15),
- le stockage (130) d'au moins une partie de l'énergie électrique dans l'accumulateur d'énergie (12) du dispositif d'inspection (10).

10. Procédé (100) selon la revendication 9, **caractérisé en ce qu'**il comprend en outre au moins l'une des étapes suivantes :
- l'utilisation d'au moins une partie de l'énergie électrique provenant de l'accumulateur d'énergie (12) pour la propulsion du dispositif d'inspection (10),
- l'inspection d'au moins une section de la conduite (11) par le dispositif d'inspection (10), de préférence pour localiser au moins une fuite, notamment à l'aide d'au moins un élément capteur (19) du dispositif d'inspection (10).

11. Procédé (100) selon l'une des revendications 9 à 10, **caractérisé en ce qu'**il comprend en outre au moins l'une des étapes suivantes :
- la génération d'une force d'appui entre le dispositif d'inspection (10) et une paroi intérieure (11.1) de la conduite (11), notamment par au moins un élément de contact (17) et/ou au moins un élément d'aile (16) du dispositif d'inspection (10),
- le blocage d'au moins une roue de guidage (18) du dispositif d'inspection (10), de manière à empêcher la roue de guidage (18) de rouler sur une paroi intérieure (11.1) de la conduite (11).

12. Procédé (200) de mise en œuvre d'un système d'inspection (50) selon l'une des revendications 7 ou 8, comprenant :
- la transmission (210) d'au moins une information d'état et/ou d'au moins une information d'inspection depuis au moins un dispositif d'inspection (10) vers l'appareil mobile (51).

13. Produit logiciel comprenant des instructions qui amènent le dispositif d'inspection (10) selon l'une des revendications 1 à 6 à exécuter un procédé (100) selon l'une des revendications 9 à 11.

14. Support de stockage lisible par ordinateur sur lequel est stocké un produit logiciel selon la revendication 13.

15. Signal de support de données transmettant un produit logiciel selon la revendication 13.
